# EUROPÄISCHE PATENTSCHRIFT

(11) **EP 4 256 267 B1**
(45) Veröffentlichungstag und Bekanntmachung des Hinweises auf die Patenterteilung: **24.01.2024**
(21) Anmeldenummer: 22701405.7
(22) Anmeldetag: 28.01.2022
(51) Int. Cl.: F28D 20/00

(54) **THERMOCHEMISCHER ENERGIESPEICHER UND SYSTEM AUFWEISEND DEN THERMOCHEMISCHEN ENERGIESPEICHER**
THERMOCHEMICAL ENERGY STORE AND SYSTEM COMPRISING THE THERMOCHEMICAL ENERGY STORE
ACCUMULATEUR D'ÉNERGIE THERMOCHIMIQUE ET SYSTÈME COMPRENANT L'ACCUMULATEUR D'ÉNERGIE THERMOCHIMIQUE

(43) Veröffentlichungstag der Anmeldung: 11.10.2023
(73) Patentinhaber: König, Bernhard, 4363 Pabneukirchen (AT)
(72) Erfinder: König, Bernhard, 4363 Pabneukirchen (AT)
(74) Vertreter: Schardmüller Gall-Schuhmann Patentanwälte OG
(86) Internationale Anmeldenummer: PCT/EP2022/052077
(87) Internationale Veröffentlichungsnummer: WO 2023/143735

(56) Entgegenhaltungen:
- JP-A- S6 152 550
- KR-A- 20180 020 504
- US-A- 3 973 552
- US-A1- 2019 233 703

## Beschreibung

Die vorliegende Erfindung betrifft einen thermochemischen Energiespeicher, ein System aufweisend den thermochemischen Energiespeicher, sowie Verwendungen des thermochemischen Energiespeichers.

### Stand der Technik

Aus dem Stand der Technik sind thermochemische Energiespeicher bekannt, welche einen Reaktant und ein Lösungsmittel aufweisen, wobei durch Zuführung von Lösungsmittel an den Reaktant thermische Energie entzogen und der thermochemische Energiespeicher somit entladen wird. Durch Zuführung von thermischer Energie an den Reaktanten kann wiederum Lösungsmittel aus diesem entfernt werden, wodurch der thermochemische Energiespeicher geladen wird.

Aus dem Stand der Technik (DE 31 13 026 A1) ist ein thermochemischer Wärmespeicher bekannt, bei dem zur Speicherung von Wärme einer Lösung eines Salzes oder Hydroxids in einem Lösungsmittel Energie zugeführt wird und somit das Lösungsmittel aus der Lösung ausgetrieben wird. Dieses Austreiben des Lösungsmittels erfolgt dabei unter stark erniedrigtem Druck (~ 0,1 bar), so dass während des Austreibens des Lösungsmittels zugleich das Salz bzw. Hydroxid zu einer schaumförmigen, porösen Phase oberhalb der Lösung ausgeschieden wird.

Durch das Auskristallisieren des Hydroxids in der schaumförmigen, porösen Phase kann zwar eine schnelle Wiederaufnahme des Lösungsmittels erreicht werden und so eine besonders reaktionsschnelle Wärmeabgabe sichergestellt werden. Um den Unterdruck bereitzustellen, welcher notwendig ist um die schaumförmige Phase auszubilden, müssen derartige Systeme allerdings aufwändig, druckdicht, und massiv konstruiert werden, was den Wartungsaufwand und die Fehleranfälligkeit und somit auch die Betriebskosten deutlich erhöht.

Aus dem Stand der Technik (EP 3 674 646 A1) sind zudem thermochemische Energiespeicher bekannt, bei denen Wasser als Reaktant in Form von Wasserdampf in einen Reaktor eingebracht wird um dort in einem Bett von reaktivem Material aufgenommen zu werden und mit diesem unter Abgabe von thermischer Energie zu reagieren. Die Zufuhr von Wasserdampf und die Durchströmung des reaktiven Bettes erfordert allerdings eine vorherige Umsetzung von Wasser in Dampf und eine aufwändige Konstruktion des Reaktors, um effizient von dem reaktiven Material aufgenommen werden zu können. Derartige Energiespeicher sind jedoch aufwändig herzustellen und wartungsintensiv, und gehen somit auch mit hohen laufenden Kosten einher.

Der in US 3,973,552 offenbarte thermochemische Energiespeicher kann dabei als nächstkommender Stand der Technik angesehen werden. Darin ist ein reversibler Wärmespeicher offenbart, welcher in einem Gehäuse eine thermochemische Zelle mit einer Reaktionsphase aufweist, welche als Bett aus Wärmespeichermaterial ausgeführt ist. Die Reaktionsphase ist dabei zwischen zwei wasserdurchlässigen Membranen eingebettet. Zum Laden der Zelle wird thermische Energie über eine im Bett aus Wärmespeichermaterial integrierte elektrische Heizung zugeführt. Zum Entladen der Zelle wird mit Wasserdampf gesättigte Luft durch das Bett aus Wärmespeichermaterial geführt.

### Offenbarung der Erfindung

Die vorliegende Erfindung hat sich daher die Aufgabe gestellt, einen thermochemischen Energiespeicher der eingangs erwähnten Art dahingehend zu verbessern, dass dieser technisch einfach ist und einen geringen Wartungsaufwand aufweist.

Die Erfindung löst die gestellte Aufgabe durch den thermochemischen Energiespeicher gemäß dem unabhängigen Anspruch 1.

Der erfindungsgemäße thermochemische Energiespeicher weist eine oder mehrere thermochemische Zellen auf, wobei die ein oder mehreren thermochemischen Zellen jeweils einen Behälter umfassen, in welchem in zumindest einem Betriebszustand eine Reaktionsphase und eine über der Reaktionsphase befindliche Gasphase ausgebildet sind. Die Reaktionsphase umfasst dabei zumindest einen Reaktant und ein Lösungsmittel, während die Gasphase ein mit Lösungsmittel angereichertes Trägergas umfasst.

Erfindungsgemäß weist der thermochemische Energiespeicher zudem zumindest einen primären Wärmemittelkreislauf mit einem Wärmeträgermittel auf, wobei das Wärmeträgermittel zur Einbringung von thermischer Energie in den thermochemischen Energiespeicher, bzw. zur Entnahme von thermischer Energie aus dem thermochemischen Energiespeicher dient.

Des Weiteren ist in dem erfindungsgemäßen thermochemischen Energiespeicher ein Fluidkreislauf zur Ableitung des Trägergases aus zumindest einer der thermochemischen Zellen und zur Einleitung des Trägergases in zumindest eine der thermochemischen Zellen vorgesehen. Der Fluidkreislauf steht dabei bevorzugt in Fluidverbindung bzw. in Fluidaustausch mit der Gasphase in der zumindest einen thermochemischen Zelle und kann somit zur Ableitung eines mit Lösungsmittel angereicherten Trägergases aus der thermochemischen Zelle dienen. Gleichzeitig kann über den Fluidkreislauf somit auch von Lösungsmittel abgereichertes Trägergas wieder in die Gasphase in der zumindest einen thermochemischen Zelle zurückgeführt werden.

Erfindungsgemäß ist zudem eine Lösungsmittelleitung zur Einbringung von Lösungsmittel in die Reaktionsphase zumindest einer der thermochemischen Zellen vorgesehen.

Erfindungsgemäß ist der Reaktant aus einer Gruppe bestehend aus Salzen, Hydroxiden, Karbonaten und ionischen Flüssigkeiten ausgewählt, so dass bei Zuführung des flüssigen Lösungsmittels aus dem Kondensatbehälter in die Reaktionsphase zumindest einer der thermochemischen Zellen, aufgrund einer exothermen Reaktion des Reaktanten mit dem Lösungsmittel, thermische Energie an das Wärmeträgermittel im primären Wärmemittelkreislauf abgegeben wird und bei Zuführung von Wärme über das Wärmeträgermittel an die Reaktionsphase zumindest einer der thermochemischen Zelle, Lösungsmittel aus der Reaktionsphase in die Gasphase überführt wird.

Gemäß einer bevorzugten Ausführungsvariante der Erfindung kann der Reaktant Natriumhydroxid (NaOH) und das Lösungsmittel Wasser sein. Gemäß einer weiteren Ausführungsvariante kann der Reaktant ebenso ein anderes hygroskopisches Salz, ein Hydroxid, ein Karbonat, oder eine ionische Flüssigkeit sein, welche eine exotherme Reaktion mit dem Lösungsmittel durchlaufen. In einer weiteren Ausführungsvariante kann der Reaktant Strontiumbromid oder Kaliumkarbonat sein.

Im Allgemeinen wird erwähnt, dass im Rahmen der Erfindung als Reaktant ein Stoff bezeichnet wird, welcher durch Lösung in einem Lösungsmittel Wärme in Form einer exothermen Reaktion abgibt. Die Reaktion ist dabei bevorzugterweise eine (vollständig) reversible chemische Reaktion, welche durch Entfernung (insbesondere durch Desorption, Abdampfen, etc.) des Lösungsmittels aus der Lösung wieder umgekehrt werden kann. Sowohl Reaktant als auch Lösungsmittel durchlaufen während der verschiedenen Betriebszustände des thermochemischen Speichers (insbesondere während dem Laden und Entladen) vorzugsweise keine irreversiblen chemischen Veränderungen, so dass nach Umkehrung der Lösung Reaktant und Lösungsmittel wieder erneut als Ausgangsstoffe für die exotherme Reaktion verwendet werden können.

Erfindungsgemäß weist der Behälter zumindest einer der thermochemischen Zellen je einen mit dem Fluidkreislauf verbundenen Fluideinlass und Fluidauslass auf, welche jeweils in die Gasphase im Behälter münden. Durch Fluideinlass und Fluidauslass im Behälter, welche jeweils mit dem Fluidkreislauf verbunden sind und in die Gasphase münden, kann auf technisch einfache Weise ein Fluidaustausch im Behälter und mit dem Fluidkreislauf sichergestellt werden, wobei das mit Lösungsmittel angereichte Trägergas aus der Gasphase über den Fluidkreislauf zu dem Kondensator geleitet und so das Lösungsmittel aus dem Trägergas entfernt werden kann. Zugleich kann das von Lösungsmittel befreite Trägergas wiederum über den Fluideinlass an die Gasphase zugeführt werden, um dort mit Lösungsmittel aus der Reaktionsphase angereichert zu werden. Die Zufuhr von Trägergas über den Fluidkreislauf direkt in die Gasphase bietet den Vorteil, dass die Lösungsmittel-Konzentration des Trägergases in der Gasphase stets niedrig gehalten werden kann und so die für die Austreibung von Lösungsmittel aus der Reaktionsphase notwendige Temperatur reduziert wird. Dies ist für einen ordnungsgemäßen und effizienten Betrieb des thermochemischen Energiespeichers von großer Bedeutung, da bei Anstieg der Lösungsmittel-Konzentration bzw. beim Erreichen des Sättigungsdampfdrucks in der Gasphase, die Verdampfungstemperatur in der Reaktionsphase ansteigt und somit eine höhere Wärmemenge bzw. Temperatur über den primären Wärmemittelkreislauf an die Reaktionsphase zugeführt werden muss, was die Effizienz des Systems negativ beeinträchtigt.

Fluideinlass und Fluidauslass können dabei sowohl getrennt voneinander, als auch als gemeinsamer Fluidein- und -auslass ausgeführt sein, wobei sich letzterer insbesondere bei sehr kompakten thermochemischen Zellen mit beengten Platzverhältnissen durch kompaktere Bauweise auszeichnen kann.

Gemäß einer Ausführungsvariante der Erfindung kann der thermochemische Energiespeicher einen Kondensator im Fluidkreislauf zur Kondensation von Lösungsmittel aus dem Trägergas aufweisen. Der Kondensator kann dabei zur Abreicherung von Lösungsmittel aus dem Trägergas des Fluidkreislaufs dienen und so zuverlässig Lösungsmittel aus dem Trägergas kondensieren, welches zuvor in der Gasphase mit Lösungsmittel angereichert wurde. Auf diese Weise kann das Lösungsmittel technisch einfach und zuverlässig aus der Gasphase entfernt werden. Dies ermöglicht eine Wiederverwendung des Trägergases zur erneuten Zuführung an eine thermochemische Zelle.

Gemäß einer Ausführungsvariante der Erfindung kann der thermochemische Energiespeicher weiter einen Kondensatbehälter zur Speicherung des im Kondensator aus dem Trägergas kondensierten Lösungsmittels aufweisen. Es wird somit sichergestellt, dass während der Betriebszustände des thermochemischen Energiespeichers kein Lösungsmittel verloren geht, bzw. das zurückgewonnene Lösungsmittel wieder zur thermischen Entladung des Energiespeichers verwendet werden kann. Somit muss kein frisches Lösungsmittel zur Zuführung an die thermochemischen Zellen bereitgestellt werden, wodurch die Betriebskosten des Energiespeichers weiter reduziert werden können.

Zudem kann die Lösungsmittelleitung dabei mit dem Kondensatbehälter derart verbunden sein, so dass Lösungsmittel direkt aus dem Kondensatbehälter an eine thermochemische Zelle zugeführt werden kann. Ein vollständiger Lösungsmittel-Kreislauf kann so geschaffen werden, wobei das im Kondensatbehälter aufgefangene und durch den Kondensator aus dem Trägergas rückgewonnene Lösungsmittel wieder über die Lösungsmittelleitung an die zumindest eine thermochemische Zelle, insbesondere in deren Reaktionsphase, zugeführt werden kann.

Gemäß einer Ausführungsvariante der Erfindung kann der Fluidkreislauf gegenüber der Umgebung geschlossen sein und Umgebungsdruck aufweisen. Durch die Verwendung eines gegenüber der Umgebung geschlossenen Fluidkreislaufs kann sichergestellt werden, dass weder Lösungsmittel noch Reaktant an die Umgebung verloren gehen, womit einerseits Ausgangsstoffe eingespart werden können und andererseits etwaige Belastungen der Umwelt vermieden werden können. Durch Abschluss des Systems bei Umgebungsdruck kann sich das System zudem durch technische Einfachheit auszeichnen, da insbesondere keine Maßnahmen getroffen werden müssen, um einen Unterdruck im System zu halten, was mit hohen Anforderungen an Dichtheit und hohem Wartungsaufwand einhergeht. Ein kostengünstiges System mit geringem Wartungsaufwand kann so bereitgestellt werden.

Es wird allgemein festgehalten, dass unter Umgebungsdruck der mittlere Luftdruck der Atmosphäre an einem beliebigen Ort verstanden wird, wobei Abweichungen zu einem momentan vorherrschenden Luftdruck im üblichen Ausmaß, etwa aufgrund von Luftdruckschwankungen durch Wetter, Höhe, etc., unbeachtlich sind. Auf Meereshöhe entspricht der Umgebungsdruck dem atmosphärischen Druck von 1 bar. Ebenso wird der zur Umwälzung von Fluid im Fluidkreislauf benötigte Differenzdruck einer Pumpe bzw. eines Umwälzventilators nicht als Druckbeaufschlagung des Gesamtsystems verstanden.

Gemäß einer bevorzugten Ausführungsvariante beträgt der Druck in der bzw. den thermochemischen Zellen sowie in dem Fluidkreislauf zwischen 80 % und 120 % des Umgebungsdrucks, insbesondere zwischen 90 % und 110 % des Umgebungsdrucks, besonders bevorzugt zwischen 95 % und 105 % des Umgebungsdrucks.

Gemäß einer weiteren Ausführungsvariante der Erfindung weist der Fluideinlass eine Einlassöffnung und der Fluidauslass eine Auslassöffnung auf, wobei Einlass- und Auslassöffnung jeweils in der Oberseite des Behälters der zumindest einen thermochemischen Zelle vorgesehen sind. Durch das Vorsehen einer Einlassöffnung in der Oberseite des Behälters kann der Trägergas-Strom aus dem Fluidkreislauf in jedem Betriebszustand der thermochemischen Zelle direkt in die Gasphase geleitet werden und so zuverlässig für einen Austausch des Trägergases in der thermochemischen Zelle sorgen. Durch den stetigen Austausch des Trägergases in der Gasphase kann ein zuverlässiger Abtransport von Lösungsmittel sichergestellt werden, wodurch die Effizienz des thermochemischen Speichers erhöht werden kann.

Gemäß einer weiteren bevorzugten Ausführungsvariante kann der Fluideinlass einen ersten Fluidleitabschnitt aufweisen, wobei der erste Fluidleitabschnitt zur Ablenkung des im Fluidkreislauf geführten Trägergases in Richtung der Reaktionsphase ausgebildet ist. Durch den ersten Fluidleitabschnitt des Fluideinlasses wird das in den Behälter der thermochemischen Zelle einströmende Trägergas vor dem Eintritt in Behälter durch die Einlassöffnung derart abgeleitet, dass es in Richtung der Reaktionsphase im Inneren des Behälters strömt. Durch Ableitung des Trägergases in Richtung der Reaktionsphase können so die Strömungsverhältnisse in der Gasphase beeinflusst werden, dass eine effiziente Aufnahme von aus der Reaktionsphase austretendem Lösungsmittel gewährleistet wird.

Insbesondere kann gemäß einer weiteren Ausführungsvariante der erste Fluidleitabschnitt derart ausgebildet sein, dass sich durch Ableitung des einströmenden Trägergases an dem Fluidleitabschnitt eine turbulente Luftströmung in der Gasphase ausbildet. Durch die turbulente Luftströmung kann der Austausch von mit Lösungsmittel angereichertem Trägergas aus der thermochemischen Zelle verbessert werden, da die Ausbildung von Toträumen bzw. Blasen in der Gasphase, welche im Falle von laminaren Strömungen an Kanten oder in Ecken auftreten können, vermieden wird. Die Effizienz des thermochemischen Speicher kann somit weiter verbessert werden.

Gemäß einer weiteren Ausführungsvariante kann der Fluidauslass einen zweiten Fluidleitabschnitt aufweisen, wobei der zweite Fluidleitabschnitt zur Führung des Trägergases ausgehend von der Reaktionsphase in den Fluidkreislauf ausgebildet ist. Durch geeignete Ausgestaltung des zweiten Fluidleitabschnitts kann somit das Strömungsbild der Gasphase im Inneren des Gehäuses der thermochemischen Zelle vorteilhaft beeinflusst werden, so dass ein Kontakt zwischen Trägergas und der Reaktionsphase derart stattfindet, dass die Effizienz der Aufnahme von Lösungsmittel aus der Reaktionsphase in die Gasphase erhöht wird.

Gemäß einer weiteren Ausführungsvariante kann der erste Fluidleitabschnitt im Längsschnitt zumindest eine Tangente aufweisen, welche die jeweilige thermochemische Zelle von ihrer Oberseite in Richtung ihrer Unterseite durchdringt. Insbesondere schneidet zumindest eine Tangente der Kontur des ersten Fluidleitabschnitts die Reaktionsphase, so dass Trägergas, welches über den ersten Fluidleitabschnitt strömt, in Richtung der Reaktionsphase abgelenkt wird.

Als Längsschnitt wird in diesem Zusammenhang ein Längsschnitt durch die jeweilige thermochemische Zelle verstanden, wobei der Längsschnitt sowohl die Reaktionsphase der thermochemischen Zelle, als auch Fluideinlass und Fluidauslass schneidet. Der Längsschnitt verläuft dabei parallel zu zwei gegenüberliegenden Seitenwänden der thermochemischen Zelle und ist normal zum Boden der thermochemischen Zelle.

Gemäß einer weiteren Ausführungsvariante kann zudem der zweite Fluidleitabschnitt ebenso im Längsschnitt zumindest eine Tangente aufweisen, welche die jeweilige thermochemische Zelle von ihrer Oberseite in Richtung ihrer Unterseite durchdringt. Dabei kann wiederum zumindest eine Tangente der Kontur des zweiten Fluidleitabschnitts die Reaktionsphase schneiden, wodurch eine Führung des Trägergases ausgehend von der Reaktionsphase in Richtung des Fluidauslasses und in den Fluidkreislauf unterstützt wird.

In anderen Worten können gemäß obiger Ausführungsvarianten der erste und der zweite Fluidleitabschnitt im Längsschnitt zumindest eine Tangente aufweisen, welche eine Normalkomponente zur Grenzfläche der Reaktionsphase und Gasphase aufweist.

Gemäß einer weiteren Ausführungsvariante schließt der erste Fluidleitabschnitt unmittelbar an die Einlassöffnung in der Oberseite der thermochemischen Zelle an. Somit kann vorteilhaft die Ableitung und Führung des Trägergases in Richtung der Reaktionsphase unmittelbar bei Eintritt des Trägergases aus dem Fluidkreislauf in den Behälter erfolgen. Bevorzugt weist der Fluidleitabschnitt gemäß oben beschriebener Ausführungsvariante unmittelbar an die Einlassöffnung anschließend eine Tangente auf, welche die thermochemische Zelle in Richtung der Reaktionsphase durchdringt, bzw. diese schneidet. Somit kann eine Führung des Trägergases zuverlässig in Richtung der Reaktionsphase ohne weitere Ablenkungen erfolgen.

Gemäß einer weiteren Ausführungsvariante schließt der zweite Fluidleitabschnitt unmittelbar an die Auslassöffnung in der Oberseite der thermochemischen Zelle an. Wie zuvor für den ersten Fluidleitabschnitt im Fluideinlass der thermochemischen Zelle beschrieben, kann die Anordnung des zweiten Fluidleitabschnitts unmittelbar an den Fluidauslass anschließend zu einer zuverlässigen Führung des Trägergases ausgehend von der Reaktionsphase in Richtung der Auslassöffnung erfolgen.

Gemäß einer weiteren Ausführungsvariante kann in dem Fluidkreislauf ein Umwälzventilator angeordnet sein. Durch den Umwälzventilator kann eine Zwangsförderung des Trägergases in dem Fluidkreislauf unterstützt werden und die Strömungsgeschwindigkeit des Trägergases im Inneren der thermochemischen Zelle gezielt gesteuert werden. Eine zuverlässigerer Austausch von Trägergas, welcher sich nicht nur auf die natürliche Konvektion des Trägergases verlässt, kann somit gewährleistet werden.

Gemäß einer weiteren Ausführungsvariante der Erfindung können die eine oder die mehreren thermochemischen Zellen jeweils zumindest einen mit dem primären Wärmemittelkreislauf verbundenen Wärmetauscher aufweisen, wobei der Wärmetauscher mit der Reaktionsphase in thermischem Kontakt steht. Somit kann direkt über den primären Wärmemittelkreislauf thermische Energie an die Reaktionsphase zugeführt werden, um Lösungsmittel aus dieser auszutreiben und die thermochemische Zelle zu laden, bzw. thermische Energie aus der thermochemischen Zelle entnommen werden, wenn diese durch Zufuhr von Lösungsmittel an die Reaktionsphase entladen wird.

Gemäß einer Ausführungsvariante kann der Wärmetauscher als Röhrenwärmetauscher im Inneren der thermochemischen Zelle ausgeführt sein, wobei der Röhrenwärmetauscher dabei innerhalb der Reaktionsphase der jeweiligen thermochemischen Zelle angeordnet ist. Insbesondere kann der Röhrenwärmetauscher Röhren zur Führung des Wärmeträgermittels aufweisen, wobei die Röhren derart in der Reaktionsphase angeordnet sind, dass sie in allen Betriebszuständen durch die Lösung in der Reaktionsphase überdeckt sind. Vorzugsweise kann der Röhrenwärmetauscher dabei als Spirale aus einem oder mehreren röhrenförmigen Schläuchen ausgeführt sein, wobei die Schläuche insbesondere aus einem gegenüber der Reaktionsphase inerten Material, bevorzugt PTFE, ausgeführt sind.

Gemäß einer weiteren Ausführungsvariante kann der Wärmetauscher ein Flächenwärmetauscher sein, welcher über dem Boden und/oder an zumindest einer Seitenwand der jeweiligen thermochemischen Zelle angeordnet ist. Insbesondere kann der Flächenwärmetauscher dabei als Plattenwärmetauscher ausgeführt sein.

Gemäß einer weiteren Ausführungsvariante kann der thermochemische Energiespeicher einen sekundären Wärmemittelkreislauf aufweisen, über welchen der Kondensator mit einer Niedertemperaturquelle verbindbar ist. Insbesondere um die Effizienz des Kondensators zu erhöhen, ist es vorteilhaft, diesen mit einer Niedertemperaturquelle zu verbinden, da hierdurch ein Erwärmen des Kondensators und somit ein Verlust der Kondensationsfähigkeit verhindert oder zumindest reduziert wird.

Als Niedertemperaturquelle eignet sich in diesem Zusammenhang jedes Wärmereservoir mit einer ausreichend niedrigen Temperatur, bei welcher eine effiziente Kondensation des Lösungsmittels aus dem Trägergas stattfinden kann. Ein solches Wärmereservoir kann gemäß einer Ausführungsvariante etwa die Umgebungsluft sein, wobei der Kondensator über den sekundären Wärmemittelkreislauf beispielsweise mit einem Luftwärmetauscher verbunden ist, welcher durch die Umgebungsluft (insbesondere die Außenluft) gekühlt wird.

Als besonders vorteilhaft hat sich in diesem Zusammenhang erwiesen, wenn der Kondensator über den sekundären Wärmemittelkreislauf mit einer oder mehreren der thermochemischen Zellen als Niedertemperaturquelle verbindbar ist. Da die thermochemischen Zellen als großes Wärmereservoir fungieren, eignen sich diese, insbesondere im ungeladenen Zustand, als Niedertemperaturquelle für den Kondensator. Der damit einhergehende Wärmeeintrag vom Kondensator in die thermochemische Zelle kann zudem vorteilhaft zum Vorwärmen der thermochemischen Zelle genutzt werden. So kann beispielsweise während des Ladens einer ersten Zelle über den primären Wärmemittelkreislauf mit thermischer Energie, eine zweite thermochemische Zelle über den sekundären Wärmemittelkreislauf mit der Abwärme aus dem Kondensator vorgeheizt werden, so dass nach vollständiger Ladung der ersten Zelle, unmittelbar mit dem Laden der zweiten Zelle begonnen werden kann, wodurch ein schnelleres Aufheizen der zweiten Zelle erfolgen kann. Auf diese Weise geht weniger thermische Energie beim Laden von thermochemischen Zellen verloren und die Effizienz des thermochemischen Speichers kann weiter verbessert werden.

Gemäß einer weiteren Ausführungsvariante kann am Behälter der thermochemischen Zelle ein Füllstandsensor vorgesehen sein. Über den Füllstandsensor kann die Füllstandhöhe bzw. das Volumen an Lösung (Lösungsmittel + Reaktant) im Inneren des Behälters ermittelt werden, und so auf den Ladezustand der jeweiligen thermochemischen Zelle geschlossen werden. Der Füllstandsensor hat dabei vorzugsweise keinen physischen Kontakt zu der Lösung, wodurch eine lange Lebensdauer mit geringem Wartungsaufwand erreicht werden kann. Insbesondere ist der Füllstandsensor dabei als elektromagnetischer Füllstandsensor, besonders bevorzugt als kapazitiver Füllstandsensor, ausgeführt, welcher an der Außenseite des Behälters angebracht ist und den Füllstand im Inneren des Behälters anhand der Veränderung des elektromagnetischen Feldes bzw. anhand der Veränderung der relativen Permittivität bestimmt.

Gemäß einer weiteren Ausführungsvariante kann der thermochemische Energiespeicher eine Sicherheitswanne mit einem Leckagedetektor aufweisen, wobei die eine oder mehreren thermochemischen Zellen in der Sicherheitswanne aufgenommen sind. Auf diese Weise kann ein besonders sicherer thermochemischer Speicher geschaffen werden, bei dem im Falle eines Austritts von Lösung aus der thermochemischen Zelle, diese Lösung in der Sicherheitswanne aufgefangen wird und durch den Leckagedetektor detektiert wird. Der Fall eines Austritts von Lösung kann somit zuverlässig detektiert werden und somit zeitnah entsprechende Schritte bzw. Wartungsarbeiten gesetzt werden.

Gemäß einer weiteren Ausführungsvariante der Erfindung kann der primäre Wärmemittelkreislauf steuerbare Ventile aufweisen, um eine oder mehrere der thermochemischen Zellen wechselweise, direkt oder indirekt mittels Wärmetauscher, mit einer Wärmequelle oder Wärmesenke zu verbinden. So können die Ventile in einem ersten Betriebszustand, in welchem eine thermochemische Zelle geladen wird, derart geschaltet sein, dass der Wärmemittelkreislauf einerseits mit einer Wärmequelle, beispielsweise einer Solar-Anlage, einer Festbrennstoff-Heizanlage oder dergleichen, verbunden ist und andererseits mit der zu ladenden thermochemischen Zelle verbunden ist, so dass thermische Energie von der Wärmequelle an die thermochemische Zelle über den Wärmemittelkreislauf zugeführt wird. In einem weiteren Betriebszustand, in welchem eine thermochemische Zelle entladen wird, können die Ventile derart geschaltet sein, dass der Wärmemittelkreislauf einerseits mit der zu entladenden thermochemischen Zelle verbunden ist und andererseits mit der Wärmesenke, beispielsweise einem Heizsystem, oder einem anderen Wärmeverbraucher, verbunden ist, so dass thermische Energie aus der thermochemischen Zelle an die Wärmesenke zugeführt wird. In weiteren Betriebszuständen können die Ventile derart geschaltet sein, dass sowohl Wärmequelle oder Wärmesenke, als auch einzelne oder mehrere thermochemische Zellen von dem Wärmemittelkreislauf getrennt werden.

Zudem sei erwähnt, dass Wärmequellen und Wärmesenken im Sinne der vorliegenden Erfindung sowohl direkt oder indirekt (etwa über einen Wärmetauscher) mit dem primären Wärmemittelkreislauf verbunden sein können. So kann eine Gebäudeheizung als Wärmesenke beispielsweise einen Wärmetauscher aufweisen, welcher mit dem primären Wärmemittelkreislauf verbindbar ist und welcher Wärmetauscher mit einem Heizungskreis der Gebäudeheizung gekoppelt ist. Ebenso kann eine Wärmesenke, wie etwa eine Solaranlage, einen Wärmetauscher aufweisen, welcher mit dem primären Wärmemittelkreislauf verbunden ist. Das oben beschriebene Prinzip lässt sich auf alle Arten von Wärmequellen und Wärmesenken umlegen.

Ebenso kann gemäß einer weiteren Ausführungsvariante der Erfindung der sekundäre Wärmemittelkreislauf steuerbare Ventile aufweisen, um eine oder mehrere der thermochemischen Zellen mit einer Niedertemperaturquelle, insbesondere mit dem Kondensator, zu verbinden.

Gemäß einer weiteren Ausführungsvariante kann der thermochemische Energiespeicher eine Steuereinrichtung aufweisen, welche dazu programmiert ist, die Ventile des primären und/oder des sekundären Wärmemittelkreislaufs in Abhängigkeit des Ladezustands der thermochemischen Zellen zur Entnahme bzw. zur Zufuhr von thermischer Energie zu steuern. Die Steuereinheit kann dazu insbesondere mit den Ventilen im primären und/oder im sekundären Wärmemittelkreislauf verbunden sein und diese einzeln bzw. getrennt voneinander ansteuern. Die Sicherheit und Zuverlässigkeit des thermochemischen Speichers kann somit weiter erhöht werden, da durch Ansteuerung der Ventile in Abhängigkeit des Ladezustands der Zellen stets sichergestellt werden kann, dass aus einer vollständig entladenen Zelle keine weitere Energie entnommen bzw. an eine vollständig geladene Zelle keine weitere Energie mehr zugeführt wird.

Unter einer vollständig geladenen thermochemischen Zelle wird im Sinne der vorliegenden Erfindung eine thermochemische Zelle verstanden, in welcher durch Zufuhr von thermischer Energie an die Reaktionsphase ein vorgegebener Konzentrations-Schwellenwert der Lösungsmittelkonzentration in der Lösung unterschritten wurde, bzw. im Umkehrschluss ein Konzentrations-Schwellenwert der Reaktantenkonzentration überschritten wurde. Alternativ kann eine vollständig geladene thermochemische Zelle auch durch ein Unterschreiten eines vorgegebenen Füllstand-Schwellenwerts des Lösungsfüllstands in dem Behälter der thermochemischen Zelle gekennzeichnet sein.

Unter einer vollständig entladenen thermochemischen Zelle im Sinne der vorliegenden Erfindung wird eine thermochemische Zelle verstanden, in welcher durch Zufuhr von Lösungsmittel an die Reaktionsphase ein vorgegebener Füllstand-Schwellenwert des Lösungsfüllstands in dem Behälter der thermochemischen Zelle überschritten wurde. Alternativ kann eine vollständig entladene thermochemische Zelle auch durch ein Überschreiten eines vorgegebenen Konzentrations-Schwellenwerts der Lösungsmittelkonzentration in der Lösung, bzw. durch ein Unterschreiten eines Konzentrations-Schwellenwerts der Reaktantenkonzentration, gekennzeichnet sein

Gemäß einer Ausführungsvariante der Erfindung kann die Steuereinrichtung weiter dazu programmiert sein, bei Überschreiten einer vorgegebenen Schwellenwerttemperatur einer mit dem primären Wärmemittelkreislauf verbundenen Wärmequelle, die Ventile des primären Wärmemittelkreislaufs zum Laden einer nicht oder nur teilweise geladenen thermochemischen Zelle anzusteuern. Insbesondere kann die Steuereinrichtung dabei mit einem Temperatursensor der Wärmequelle verbunden sein, um so deren Temperatur zu überwachen. Die Steuereinheit kann so zuverlässig erkennen, wann die Temperatur der Wärmequelle ausreichend hoch ist, um bei Zufuhr von thermischer Energie aus der Wärmequelle an die Reaktionsphase in dieser die zur Abdampfung von Lösungsmittel notwendige Temperatur zu erreichen. Dabei kann vermieden werden, dass thermische Energie aus der Wärmequelle an die thermochemische Zelle zugeführt wird, diese aber nicht zur Ladung der thermochemischen Zelle führt, sondern lediglich die Reaktionsphase erwärmt. Energieverluste können so reduziert und die Effizienz des thermochemischen Speichers erhöht werden.

Gemäß einer Ausführungsvariante der Erfindung kann die Steuereinrichtung dazu programmiert sein, den Ladezustand der thermochemischen Zellen zu speichern und/oder zu überwachen und so im Falle von zur Verfügung stehender thermischer Energie aus einer Wärmequelle, stets die Ventile derart ansteuern, dass eine ungeladene oder nur teilweise geladene thermochemische Zelle mit der Wärmequelle verbunden wird, um diese Zelle zu laden.

Gemäß einer weiteren Ausführungsvariante kann die Steuereinrichtung mit Sensoren und/oder einer Steuereinrichtung einer Wärmequelle verbunden sein, um die aus der Wärmequelle zum Laden der thermochemischen Zellen zur Verfügung stehende Wärmemenge zu ermitteln. Nach Ermittlung der Wärmemenge, kann die Steuereinrichtung jene thermochemische Zelle zum Laden auswählen bzw. die Ventile zur Verbindung jener Zelle mit der Wärmequelle ansteuern, welche durch Zufuhr der ermittelten Wärmemenge die vorteilhafteste Verbesserung des Ladezustands erreichen kann und/oder welche die ermittelte Wärmemenge vollständig aufnehmen kann. Die Energieeffizienz des thermochemischen Speichers kann somit durch Vermeidung bzw. Reduzierung von Wärmeverlusten beim Laden der thermochemischen Zellen weiter verbessert werden.

Gemäß einer weiteren Ausführungsvariante der Erfindung, kann die Steuereinrichtung weiter dazu programmiert sein, die Füllstandsensoren der thermochemischen Zellen auszulesen und bei Unterschreiten eines vorgegebenen Füllstand-Schwellenwerts in einer thermochemischen Zelle, ein Signal auszugeben, welches die vollständige Ladung jener thermochemischen Zelle anzeigt. Dazu kann die Steuereinheit vorzugsweise mit den Füllstandsensoren der einen oder mehreren thermochemischen Zellen verbunden sein, um so die Füllstände der thermochemischen Zellen zu erfassen und gegebenenfalls zu überwachen. Das ausgegebene Signal kann beispielsweise zur Information eines Benutzer dienen, wann eine thermochemische Zelle vollständig geladen wurde. Alternativ kann das Signal auch an eine Steuereinheit der Wärmequelle zugeführt werden, so dass in dieser die Wärmezufuhr an den thermochemischen Energiespeicher gestoppt wird, bzw. die Wärme an einen anderen Verbraucher oder an einen anderen Energiespeicher zugeführt werden kann.

Gemäß einer weiteren Ausführungsvariante der Erfindung kann die Steuereinrichtung weiter dazu programmiert sein, im Falle der vollständigen Ladung einer thermochemischen Zelle, die Temperaturspreizung des Wärmeträgermittels beim Laden der thermochemischen Zelle zu ermitteln, und bei Unterschreiten der Temperaturspreizung eines vorgegebenen Temperaturspreizung-Schwellenwerts, die Ventile derart anzusteuern, um die vollständige geladene thermochemische Zelle vom primären Wärmemittelkreislauf zu trennen. Wird etwa die vollständige Ladung der thermochemischen Zelle durch Unterschreitung eines Füllstands-Schwellenwerts, bzw. durch Unterschreitung eines vorgegebenen Konzentrations-Schwellenwert der Lösungsmittelkonzentration in der Lösung, von der Steuereinrichtung festgestellt, so kann die thermochemische Zelle dennoch solange weiter geladen werden, bis die Temperaturspreizung des Wärmeträgermittels unter einen vorgegebenen Temperaturspreizungs-Schwellenwert fällt, wenn also keine thermische Energie mehr von der thermochemischen Zelle aufgenommen wird. Dies ist insbesondere dann der Fall, wenn die Lösungsmittelkonzentration in der thermochemischen Zelle unter einen bestimmten Konzentrations-Schwellenwert gefallen ist und durch Zufuhr von weiterer thermischer Energie kein Lösungsmittel mehr aus der Reaktionsphase entfernt werden kann. Durch Überwachung der Temperaturspreizung kann somit zuverlässig festgestellt werden, wann eine thermochemische Zelle vollständig geladen ist und durch Ansteuerung der Ventile von der Wärmequelle bzw. vom primären Wärmemittelkreislauf getrennt werden kann.

Unter Temperaturspreizung des Wärmeträgermittels beim Laden einer thermochemischen Zelle wird die Temperaturdifferenz zwischen der Temperatur des Wärmeträgermittels vor Eintritt in eine thermochemische Zelle und der Temperatur des Wärmeträgermittels nach Austritt aus der thermochemischen Zelle verstanden.

Gemäß einer weiteren Ausführungsvariante der Erfindung kann die Steuereinrichtung weiter dazu programmiert sein, bei Empfang eines Signals zur Abgabe von Wärme aus dem Energiespeicher an eine Wärmesenke, eine Pumpe in einer Lösungsmittelleitung anzusteuern, um Lösungsmittel aus dem Kondensatbehälter an die Reaktionsphase einer geladenen oder teilweise geladenen thermochemischen Zelle zuzuführen.. Beim Aufnehmen des Lösungsmittels in der Reaktionsphase wird durch die chemische Reaktion mit dem Reaktant thermische Energie freigesetzt, welche über den primären Wärmemittelkreislauf an die Wärmesenke zugeführt werden kann. Durch die Aufnahme des Lösungsmittels in der Reaktionsphase steigt wiederum der Lösungsfüllstand in dem Behälter bzw. steigt die Lösungsmittelkonzentration in der Lösung, mit absinkendem Ladezustand der thermochemischen Zelle.

Gemäß einer weiteren Ausführungsvariante der Erfindung kann die Steuereinrichtung weiter dazu programmiert sein, die Durchflussmenge an Wärmemittel im primären Wärmemittelkreislauf durch Ansteuerung einer Wärmemittelpumpe in dem Wärmemittelkreislauf zu steuern. Dies kann insbesondere von Vorteil sein, um einerseits die Ausgangstemperatur der Wärmequelle in einem vorteilhaften Bereich zu halten, und andererseits um die an die thermochemische Zelle zugeführte Energiemenge zu regeln und/oder zu limitieren, beispielsweise um die an die thermochemische Zelle zugeführte Temperatur in einem bevorzugten Bereich zu halten. Eine verbesserte Lebensdauer und Wartungsfreiheit des Energiespeichers kann so erreicht werden.

Die Erfindung hat sich zudem die Aufgabe gestellt, ein System bestehend aus einem Energiespeicher und einer Wärmepumpe bereitzustellen, welches sich durch eine hohe Systemeffizienz auszeichnet und den Strombedarf der Wärmepumpe reduziert.

Die gestellte Aufgabe wird zudem durch ein System, bestehend aus einem thermochemischen Energiespeicher gemäß einem der Ansprüche 9 bis 13 und einer Wärmepumpe gelöst, wobei die Wärmepumpe einen Kondensator zur Abgabe von Energie an eine Wärmesenke und einem Verdampfer zur Aufnahme von Energie von einer Wärmequelle umfasst und wobei der Verdampfer der Wärmepumpe als Wärmesenke mit dem primären Wärmemittelkreislauf des thermochemischen Energiespeichers gekoppelt ist. Ein solches System kann insbesondere die Effizienz der Wärmepumpe in der kalten Jahreszeit deutlich erhöhen, indem die Temperatur des Verdampfers der Wärmepumpe angehoben wird. Zudem ist zur Anhebung des Temperaturniveaus des Verdampfers mit einem geringen Energieeinsatz verbunden, wodurch der erfindungsgemäße thermochemische Energiespeicher in Kombination mit der Wärmepumpe zur ganzjährigen effizienten Versorgung einer Wärmesenke (bspw. eines Haushalts mit Gebäude- und/oder Warmwasserheizung) beitragen kann. Der Einsatz von zusätzlichen Heizmitteln (wie etwa direkte Erwärmung mittels elektrischem Strom) kann so vermieden bzw. verringert werden, wodurch die vorliegende Erfindung zur Erhöhung der Systemeffizienz bei Wärmepumpen bzw. zur Schaffung eines ganzjährig autarken, von externen Energiequellen unabhängigen, Heizsystems beitragen kann.

Gemäß einer weiteren Ausführungsvariante des Systems kann die Wärmepumpe dazu einen mit dem Verdampfer gekoppelten Wärmetauscher aufweisen, welcher mit dem primären Wärmemittelkreislauf des thermochemischen Energiespeichers verbunden ist. So kann auf technisch einfache Weise entweder ein bereits in der Wärmepumpe vorhandener Wärmetauscher mit dem primären Wärmemittelkreislauf verbunden werden, oder ein zusätzlicher Wärmetauscher auf der Verdampferseite vorgesehen werden, welcher durch Vorschaltung vor dem Verdampfer mit diesem gekoppelt ist. Dies kann sich insbesondere für den Einsatz in Luftwärmepumpen eignen, in denen die auf den Verdampfer einströmende Umgebungsluft ein ineffizientes Temperaturniveau besitzt und so das Kältemittel der Wärmepumpe durch den Wärmetauscher vorgewärmt wird.

Vorteilhaft eignet sich der erfindungsgemäße thermochemische Energiespeicher gemäß einem der Ansprüche 1 bis 13 als Gebäudeheizung, etwa indem ein Wärmetauscher des Wärmemittelkreislaufs der Gebäudeheizung als Wärmesenke direkt mit dem primären Wärmemittelkreislauf des thermochemischen Energiespeichers verbunden ist.

Ebenso kann sich der erfindungsgemäße thermochemische Energiespeicher gemäß einem der Ansprüche 1 bis 13 ebenso vorteilhaft zur Verwendung als Pufferspeicher, insbesondere zur Pufferspeicherung von thermischer Energie aus Kraftwerken, von Nah- oder Fernwärme, von Solarkollektoren oder von Photovoltaik-Anlagen eignen. Der thermochemische Energiespeicher kann dabei im Falle von überschüssiger Energie geladen werden und so thermische Energie zur späteren Freigabe zwischenspeichern bzw. puffern.

Ebenso eignet sich ein erfindungsgemäßes System gemäß Anspruch 14 besonders als Gebäudeheizung. Durch die Verwendung des erfindungsgemäßen Systems als Gebäudeheizung, kann eine besonders effiziente Gebäudeheizung unter Verwendung einer Wärmepumpe bereitgestellt werden.

### Kurzbeschreibung der Figuren

Im Folgenden werden bevorzugte Ausführungsvarianten der Erfindung anhand der Zeichnungen näher dargestellt. Es zeigen:
- Fig. 1: eine schematische Ansicht eines thermochemischen Energiespeichers mit vier thermochemischen Zellen gemäß einer ersten Ausführungsvariante der Erfindung,
- Fig. 2: eine schematische Detailansicht einer thermochemischen Zelle des thermochemischen Energiespeichers gemäß einer zweiten Ausführungsvariante während des Ladens der thermochemischen Zelle,
- Fig. 3: eine schematische Detailansicht einer thermochemischen Zelle des thermochemischen Energiespeichers gemäß der ersten Ausführungsvariante während des Entladens der thermochemischen Zelle,
- Fig. 4: eine schematische Ansicht eines thermochemischen Energiespeichers gemäß einer zweiten Ausführungsvariante der Erfindung.

### Wege zur Ausführung der Erfindung

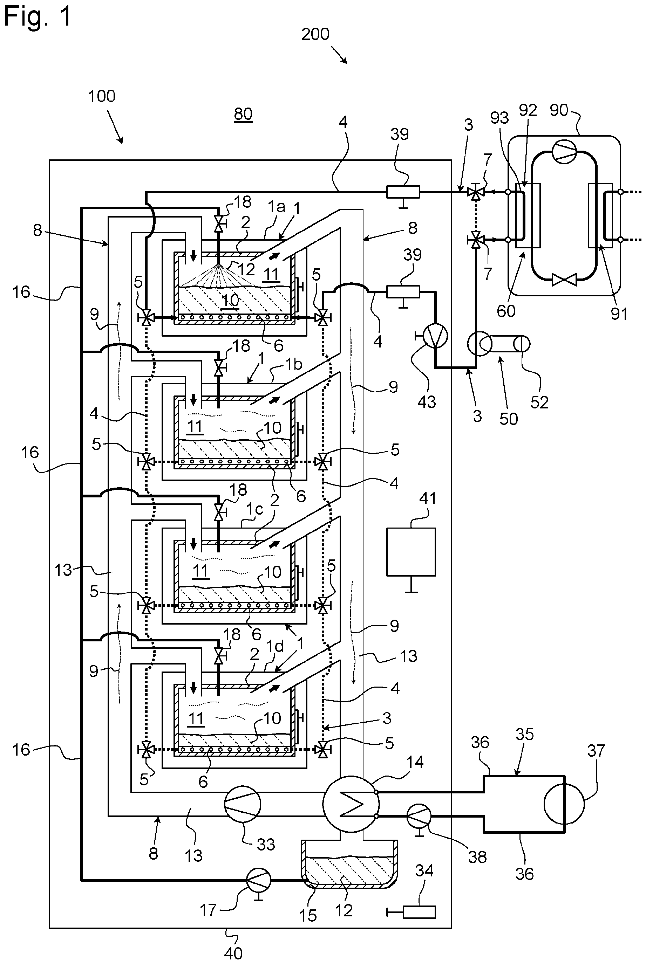

Gemäß Fig. 1 ist ein erfindungsgemäßer thermochemischer Energiespeicher 100 gemäß einer ersten Ausführungsvariante der Erfindung gezeigt. Der thermochemische Energiespeicher 100 weist dabei vier thermochemische Zellen 1, insbesondere eine erste, zweite, dritte und vierte thermochemische Zelle 1a, 1b, 1c, 1d, auf, wobei die thermochemischen Zellen 1 jeweils einen Behälter 2 umfassen.

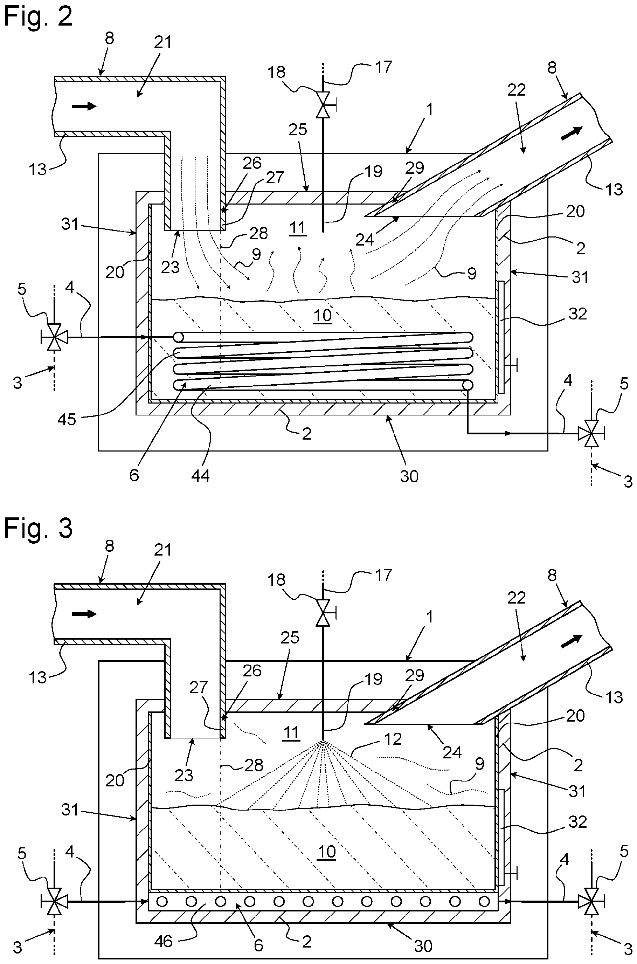

Im Folgenden wird die erste Ausführungsvariante des thermochemischen Energiespeichers 100 anhand der Fig. 1 beschrieben. Zu einer detaillierten Beschreibung des Aufbaus der thermochemischen Zellen 1 in dem thermochemischen Energiespeicher 100 wird auf die Fig. 2 und 3 und die weiter unten folgenden Ausführungen dazu verwiesen.

Im Inneren des Behälters 2 jeder thermochemischen Zelle 1 ist eine Reaktionsphase 10 und eine Gasphase 11 aufgenommen. Die Reaktionsphase 10 besteht zumindest in einem Betriebszustand aus einer Lösung aus einem Reaktant und einem Lösungsmittel 12. Die Gasphase 11 wiederum ist im Behälter 2 über der Reaktionsphase 10 angeordnet und umfasst in zumindest einem Betriebszustand ein mit Lösungsmittel 12 angereichertes Trägergas 9. In einem weiteren Betriebszustand kann die Gasphase 11 auch im Wesentlichen nur aus Trägergas 9 bestehen und nur marginal bzw. gar nicht mit Lösungsmittel aus der Reaktionsphase 10 angereichert sein.

Gemäß einer bevorzugten Ausführungsvariante der Erfindung ist der Reaktant NaOH und das Lösungsmittel 12 Wasser. Gemäß weiteren Ausführungsvarianten der Erfindung kann der Reaktant auch aus einer Gruppe bestehend aus Salzen, Hydroxiden, Karbonaten und ionischen Flüssigkeiten ausgewählt sein.

Reaktant und Lösungsmittel 12 sind jedenfalls so aufeinander abgestimmt, dass bei Zuführung von Lösungsmittel 12 an den Reaktanten in der Reaktionsphase 10 in einer der thermochemischen Zellen 1 aufgrund einer exothermen Reaktion des Reaktanten mit dem Lösungsmittel 12 thermische Energie frei wird, welche dann aus der jeweiligen thermochemischen Zelle 1 entnommen und einer Wärmesenke 60 zugeführt werden kann, was dem Betriebszustand des Entladens des thermochemischen Energiespeichers 100 entspricht.

Ebenso sind Reaktant und Lösungsmittel 12 so ausgewählt, dass bei Zuführung von thermischer Energie aus einer Wärmequelle 50 an die Lösung in der Reaktionsphase 10 Lösungsmittel 12 aus dieser an die Gasphase 11 abgegeben wird, was dem Betriebszustand des Ladens des thermochemischen Energiespeichers 100 entspricht.

Während des Entladens des thermochemischen Energiespeichers 100, bzw. insbesondere einer thermochemischen Zelle 1, sinkt somit durch Zugabe von Lösungsmittel 12 die Konzentration des Reaktanten in der Reaktionsphase 10 der entsprechenden thermochemischen Zelle 1 und während des Ladens des thermochemischen Energiespeichers 100, bzw. der thermochemischen Zelle 1, steigt durch Abgabe des Lösungsmittels 12 an die Gasphase 11 die Konzentration des Reaktanten in der Reaktionsphase 10 der thermochemischen Zelle 1.

Der thermochemische Energiespeicher 100 weist weiter einen primären Wärmemittelkreislauf 3 auf, in welchem ein Wärmeträgermittel zirkuliert, wobei der primäre Wärmemittelkreislauf 3 mit den thermochemischen Zellen 1 zur Entnahme und zur Einbringung von thermischer Energie verbunden ist. Wie in Fig. 1 gezeigt, sind die Wärmemittelleitungen 4 des primären Wärmemittelkreislaufes 3 jeweils über Ventile 5 mit einem Wärmetauscher 6 in jeder thermochemischen Zelle 1 verbunden. So kann das Wärmeträgermittel im primären Wärmemittelkreislauf 3 durch den Wärmetauscher 6 im Inneren der thermochemischen Zelle 1 zirkulieren und dort thermische Energie von dieser aufnehmen bzw. an diese abgeben.

Wie in Fig. 1 dargestellt, sind nur die Ventile 5 der ersten thermochemischen Zelle 1a geöffnet, womit auch lediglich die erste thermochemische Zelle 1a mit dem primären Wärmemittelkreislauf 3 verbunden ist. Die weiteren thermochemischen Zellen 1b, 1c, 1d sind vom primären Wärmemittelkreislauf 3 getrennt, was als strichlierte Wärmemittelleitungen 4 dargestellt ist, können allerdings durch Öffnen der jeweiligen Ventile 5 ebenso mit dem Wärmemittelkreislauf 3 verbunden werden, bzw. kann die erste thermochemische Zelle 1a durch Schließen der Ventile 5 von dem primären Wärmemittelkreislauf 3 getrennt werden, was in den Figuren jedoch nicht näher dargestellt wurde.

Zudem ist der primäre Wärmemittelkreislauf 3 außerhalb des thermochemischen Energiespeichers 100 mit einer oder mehreren Wärmequellen 50 und/oder Wärmesenken 60 verbindbar. Wie in Fig. 1 dargestellt, ist gemäß der ersten Ausführungsvariante der Energiespeicher 100 über den primären Wärmemittelkreislauf 3 mit einer Wärmepumpe 90, insbesondere mit dem Verdampfer 92 einer Wärmepumpe 90, als Wärmesenke 60 über Ventile 7 verbindbar. Des Weiteren ist eine elektrische Heizung 52 als Wärmequelle 50 permanent in den primären Wärmemittelkreislauf 3 integriert. Diese elektrische Heizung 52 kann gemäß einer Ausführungsvariante etwa mit Photovoltaik-Modulen verbunden sein, um den thermochemischen Energiespeicher 100 bei zur Verfügung stehender elektrischer Energie zu laden, was in Fig. 1 jedoch nicht näher dargestellt wurde. In dem in Fig. 1 dargestellten Betriebszustand sind die Ventile 7 zur Verbindung des Verdampfers 92 mit dem primären Wärmemittelkreislauf 3 als Wärmesenke 60 geöffnet.

Gemäß einer weiteren, in Fig. 1 nicht dargestellten, Ausführungsvariante, kann der primäre Wärmemittelkreislauf 3 auch mit weiteren Wärmequellen 50 oder Wärmesenken 60 verbindbar sein. Als Wärmequelle 50 kommen dabei insbesondere eine Festbrennstoff-, Gas- oder Fernwärme-Heizung, eine elektrische Heizung, oder eine andere Wärmequelle, wie etwa Wärmetauscher in Heizanlagen in Frage. Als Wärmesenke 60 kommen wiederum Heizungen oder Wärmetauscher zur Heizung von Gebäuden oder Warmwasser, Fernwärmenetze oder Wärmetauscher in anderen Heizgeräten oder -anlagen in Frage.

Der thermochemische Energiespeicher 100 umfasst weiter einen Fluidkreislauf 8, welcher mit den thermochemischen Zellen 1 verbunden ist und zur Führung des Trägergases 9 ausgebildet ist. Der Fluidkreislauf 8 ist mit den thermochemischen Zellen 1 über Fluidleitungen 13 so verbunden, dass mit Lösungsmittel 12 angereichertes Trägergas 9 aus den jeweiligen thermochemischen Zellen 1 abgeleitet werden kann und von Lösungsmittel 12 abgereichertes Trägergas 9 wiederrum an die thermochemische Zelle 1 zugeführt werden kann.

Gemäß der bevorzugten Ausführungsvariante ist der Fluidkreislauf 8 gegenüber der Umgebung 80 geschlossen und weist Umgebungsdruck auf. In alternativen Ausführungsvarianten kann der Fluidkreislauf 8 auch Überdruck oder Unterdruck gegenüber der Umgebung aufweisen. In wieder einer alternativen Ausführungsvariante kann der Fluidkreislauf 8 auch gegenüber der Umgebung offen, also nicht dicht sein.

Dazu ist gemäß der in Fig. 1 gezeigten Ausführungsvariante in dem Fluidkreislauf 8 ein Kondensator 14 zur Kondensation von Lösungsmittel 12 aus dem Trägergas 9 angeordnet, wobei das kondensierte Lösungsmittel 12 in einem Kondensatbehälter 15 aufgefangen und gespeichert wird.

In einer alternativen Ausführungsvariante kann auf den Kondensator 14 und/oder den Kondensatbehälter 15 verzichtet werden. Das Trägergas 9 kann dabei von außerhalb des Energiespeichers 100 an die thermochemischen Zellen 1 zugeführt werden, bzw. kann das Trägergas 9 aus den thermochemischen Zellen 1 wieder aus dem Energiespeicher 100 hinausgeführt werden. Ebenso kann bei Verzicht auf einen Kondensatbehälter 15, das Lösungsmittel 12 von außerhalb des Energiespeichers 100 an diesen zugeführt werden.

Der thermochemische Energiespeicher 100 weist weiters Lösungsmittelleitungen 16 zum Einbringen von Lösungsmittel 12 aus dem Kondensatbehälter 15 in die Reaktionsphasen 10 der thermochemischen Zellen 1 auf.

Wie in Fig. 1 dargestellt, weist die Lösungsmittelleitung 16 eine steuerbare Pumpe 17 und steuerbare Ventile 18 auf. Durch gezielte Ansteuerung der Pumpe 17 und der Ventile 18 kann somit Lösungsmittel 12 aus dem Kondensatbehälter 15 an eine gewünschte thermochemische Zelle 1 zugeführt werden.

In dem in Fig. 1 gezeigten Betriebszustand (Entladen der ersten thermochemischen Zelle 1a), ist das Ventil 18 zur ersten thermochemischen Zelle 1a hin geöffnet und die Pumpe 17 aktiviert, so dass Lösungsmittel 12 an die Reaktionsphase 10 der ersten thermochemischen Zelle 1a zugeführt wird (als Sprühnebel aus Lösungsmittel 12 dargestellt). Die in der Reaktionsphase 10 einsetzende chemische Reaktion führt, wie weiter oben beschrieben, zu dem Freiwerden von thermischer Energie, welche dann über den Wärmetauscher 6 an den primären Wärmemittelkreislauf 3 abgegeben und der Wärmepumpe 90 als Wärmesenke 60 zugeführt wird.

Eine detaillierte Beschreibung zum Vorgang des Entladens der thermochemischen Zelle 1 ist im Folgenden in Bezug auf Fig. 3 gegeben.

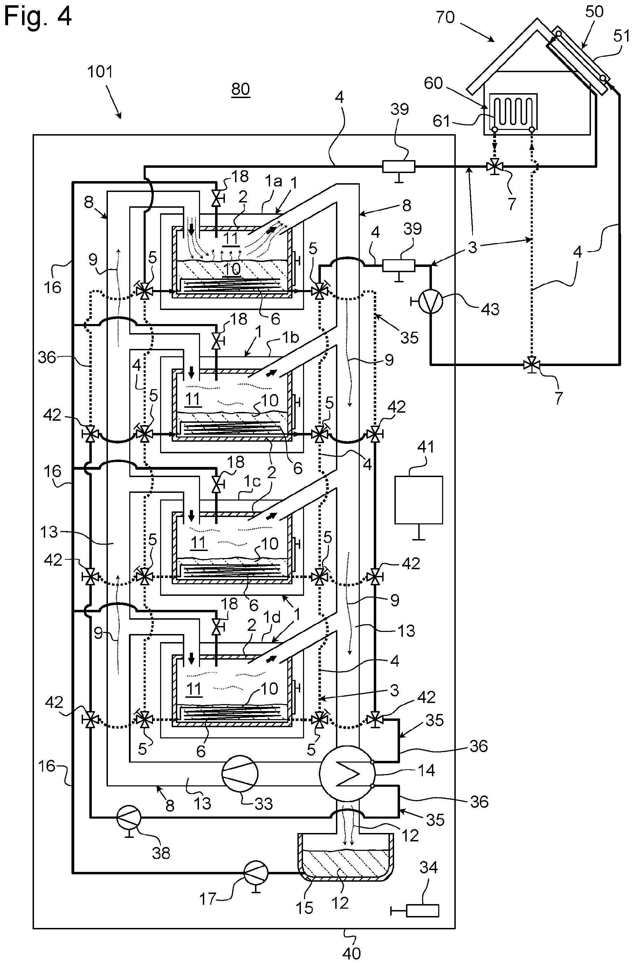

In Fig. 2 und Fig. 3 ist eine thermochemische Zelle 1 gemäß zweier Ausführungsvarianten in größerem Detail und in zwei unterschiedlichen Betriebszuständen dargestellt. Die in Fig. 2 dargestellte Ausführungsvariante der thermochemischen Zelle 1 entspricht jener in Fig. 4 gezeigten Ausführungsvariante, während die in Fig. 3 dargestellte Ausführungsvariante jener in Fig. 1 gezeigten Ausführungsvariante entspricht. Die dabei anhand der Fig. 2 und 3 beschriebenen Merkmale der thermochemischen Zellen 1 sind mutatis mutandis auf die jeweils andere übertragbar, sofern nichts anderes angegeben ist.

In Fig. 2 wird die thermochemische Zelle 1 während des Ladens gezeigt, also während thermische Energie von einer Wärmequelle 50 über den primären Wärmemittelkreislauf 3 an die thermochemische Zelle 1, bzw. an deren Reaktionsphase 10, zugeführt wird. Dazu sind die Ventile 5 geöffnet und der Wärmetauscher 6 im Inneren der thermochemischen Zelle 1 ist mit dem primären Wärmemittelkreislauf 3 verbunden.

Wie bereits zuvor erwähnt, weist die thermochemische Zelle 1 einen Behälter 2 auf, in dem die Reaktionsphase 10 und die über der Reaktionsphase 10 angeordnete Gasphase 11 aufgenommen sind. Der Behälter 2 weist zudem im Inneren vorzugsweise eine inerte Schutzschicht 20 auf, welche den Behälter 2 vor Kontakt mit der Reaktionsphase 10, bzw. dem darin enthaltenen Reaktant schützt. Gemäß einer bevorzugten Ausführungsvariante kann die Schutzschicht 20 durch eine PTFE Folie bzw. PTFE Auskleidung gebildet sein.

Der Wärmetauscher 6 im Behälter 2 steht also mit der Reaktionsphase 10 in thermischem Kontakt und kann so zum Laden der thermochemischen Zelle 1 thermische Energie aus dem Wärmeträgermittel des primären Wärmemittelkreislaufs 3 an die Reaktionsphase 10 abgeben, bzw. zum Entladen der thermochemischen Zelle 1 thermische Energie aus der Reaktionsphase 10 an das Wärmeträgermittel des primären Wärmemittelkreislaufs 3 abgeben.

Gemäß der in Fig. 2 dargestellten Ausführungsvariante der thermochemischen Zelle 1, ist der Wärmetauscher 6 als Röhrenwärmetauscher 44 ausgeführt, welcher im Inneren der thermochemischen Zelle 1, insbesondere im Inneren der Reaktionsphase 10, angeordnet ist. Der Röhrenwärmetauscher 44 besteht dabei vorzugsweise aus einer aus röhrenförmigen Schläuchen (bzw. Röhren) geformten Spirale 45. Die Schläuche/Röhren sind dabei aus einem gegenüber der Reaktionsphase 10 inerten Material, vorzugsweise PTFE, gefertigt. Das Wärmeträgermittel kann somit direkt aus dem primären Wärmemittelkreislauf 3 durch die Spirale 45 des Röhrenwärmetauschers 44 fließen und so für eine besonders gute Wärmeübertragung zwischen Wärmemittel und Reaktionsphase 10 sorgen. Wie in weiterer Folge gemäß Fig. 3 beschrieben, kann der Wärmetauscher 6 auch als Flächenwärmetauscher 46 ausgeführt sein.

Wird nun beim Laden der thermochemischen Zelle 1 thermische Energie über den primären Wärmemittelkreislauf 3 an die Reaktionsphase 10 zugeführt, so nimmt die Reaktionsphase 10 die thermische Energie auf und setzt diese in eine Erwärmung der Lösung aus Reaktant und Lösungsmittel 12 um. Bei Erreichen einer kritischen Temperatur beginnt nun Lösungsmittel 12 aus der Lösung in der Reaktionsphase 10 zu desorbieren und in die darüber angeordnete Gasphase 11 überzugehen, bzw. das darin enthaltene Trägergas 9 mit Lösungsmittel 12 anzureichern. Das mit Lösungsmittel 12 angereicherte Trägergas 9 wird dann, wie zuvor anhand Fig. 1 beschrieben, aus der thermochemischen Zelle 1 abgeführt und über den Kondensator 14 geleitet, wo das Lösungsmittel 12 wieder kondensiert und in dem Lösungsmittelbehälter 15 aufgefangen wird.

Um das mit Lösungsmittel 12 angereicherte Trägergas 9 in der Gasphase 11 im Inneren der thermochemischen Zelle 1 effizient über den Fluidkreislauf 8 abzutransportieren, weist die thermochemische Zelle 1 je einen mit dem Fluidkreislauf 8 verbundenen Fluideinlass 21 und Fluidauslass 22 auf, wobei sowohl Fluideinlass 21 als auch Fluidauslass 22 jeweils direkt in die Gasphase 11 im Behälter 2 münden. Durch das direkte Münden des Fluideinlasses 21 und des Fluidauslasses 22 in die Gasphase 11 kann einerseits ein effizienter Austausch des angereicherten Trägergases 9 in der Gasphase 11 mit frischem Trägergas 9 aus dem Fluidkreislauf 8 erfolgen und andererseits vermieden werden, dass Reaktanten enthaltende Lösung aus der Reaktionsphase 10 in den Fluidkreislauf 8 gelangt und dort das Lösungsmittel 12 verunreinigt.

Wie in Fig. 2 weiter ersichtlich weist der Fluideinlass 21 eine Einlassöffnung 23 und der Fluidauslass 22 eine Auslassöffnung 24 auf, wobei Einlassöffnung 23 und Auslassöffnung 24 in der Oberseite 25 des Behälters 2 vorgesehen sind und so direkt an die Gasphase 11 anschließen. In dem die Einlassöffnung 23 direkt in der Oberseite 25 des Behälters 2 vorgesehen ist, kann das aus Fluidkreislauf 8 durch den Fluideinlass 21 in die thermochemische Zelle 1 einströmende Trägergas 9 in Richtung der Reaktionsphase 10 gelenkt werden, wie dies in Fig. 2 schematisch dargestellt wurde. Ebenso kann die in der Oberseite 25 des Behälters 2 vorgesehene Auslassöffnung 24 das Trägergas 9 aus dem Behälter 2 von der Reaktionsphase 10 in Richtung des Fluidauslasses 22 lenken.

Durch das Lenken des einströmenden Trägergases 9 direkt in Richtung der Reaktionsphase 10, kann das aus der Reaktionsphase 10 abdampfende Lösungsmittel 12 rasch durch frisches Trägergas 9 ersetzt werden, ohne dass eine starke Konzentrationserhöhung an Lösungsmittel 12 innerhalb der Gasphase 11 erfolgt. Eine solche Erhöhung der Konzentration, bzw. Sättigung des Trägergases 9, würde zu einer deutlichen Verminderung der Effizienz bei der Aufnahme und Desorption von Lösungsmittel 12 aus der Reaktionsphase 10 führen. Auch bei der Ableitung des angereicherten Trägergases 9 aus dem Behälter 2 ist es wichtig, dass das Trägergas 9 ohne längere Verweilzeit direkt von der Reaktionsphase 10 in Richtung der Auslassöffnung 24 und durch den Fluidauslass 22 aus dem Behälter 2 geführt wird.

Zudem weist der Fluideinlass 21 einen ersten Fluidleitabschnitt 26 auf, um das Trägergas 9 vor dem Austritt aus der Einlassöffnung 23 zielgerichtet in Richtung der Reaktionsphase 10 abzulenken. Der Fluidleitabschnitt 26 ist dabei gemäß einer bevorzugten Ausführungsvariante als Schenkel 27 ausgebildet, welcher sich von der Oberseite 25 des Behälters 2 ausgehend ins Innere des Behälters 2 in Richtung der Reaktionsphase 10 erstreckt. In alternativen Ausführungsvarianten kann sich der Fluidleitabschnitt 26 auch zur Außenseite des Behälters 2 hin erstrecken. Bevorzugt schließt der Fluidleitabschnitt 26 unmittelbar an die Einlassöffnung 23 in der Oberseite 25 der thermochemischen Zelle 1 bzw. deren Behälter 2 an.

Um sicherzustellen, dass das Trägergas 9 beim Durchtritt durch den Fluideinlass 21 über den Fluidleitabschnitt 26 zuverlässig in Richtung Reaktionsphase 10 gelenkt wird, weist der Fluidleitabschnitt 26 im Längsschnitt, wie in Figs. 2 und 3 dargestellt, eine Tangente 28 auf, welche die thermochemische Zelle 1 von ihrer Oberseite 25 in Richtung ihrer Unterseite 30 durchdringt und dabei die Reaktionsphase 10 schneidet. Bei der dargestellten Ausführungsvariante verläuft die Tangente 28 normal bzw. senkrecht zur Oberseite 25 des Behälters 2. In alternativen Ausführungsvarianten kann die Tangente aber ebenso schräg von der Einlassöffnung 23 ausgehend in Richtung der Unterseite 30 des Behälters verlaufen. In wieder einer weiteren Ausführungsvariante kann der Fluidleitabschnitt 26 im Längsschnitt eine Vielzahl von Tangenten aufweisen, welche die Reaktionsphase 10 schneiden, etwa wenn der Fluidleitabschnitt 26 eine Krümmung aufweist.

In gleicher Weise wie für den ersten Fluidleitabschnitt 26 zuvor beschrieben, weist der Fluidauslass 22 einen zweiten Fluidleitabschnitt 29 auf, um das Trägergas 9 vor dem Austritt aus dem Behälter 2 durch die Auslassöffnung 24 von der Reaktionsphase 10 in Richtung des Fluidauslasses 22 zu führen. In einer weiteren, in den Figuren nicht dargestellten Ausführungsvariante, kann auch der zweite Fluidleitabschnitt 29, wie zuvor für den ersten Fluidleitabschnitt 26 beschrieben im Längsschnitt eine Tangente aufweisen, welche die Reaktionsphase 10 schneidet.

In Fig. 3 wird die thermochemische Zelle 1 während des Entladens gezeigt, also während Lösungsmittel 12 aus dem Lösungsmittelbehälter 15 an die Reaktionsphase 10 zugeführt wird, wobei der Lösungsmittelbehälter 15, welcher über die Lösungsmittelleitung 16 und das Ventil 18 mit der thermochemischen Zelle 1 verbunden ist, aus Gründen der Einfachheit jedoch nicht dargestellt wurde.

Die mit der thermochemischen Zelle 1 verbundene Lösungsmittelleitung 17 weist einen Lösungsmittelauslass 19 im Inneren des Behälters 2 auf, wobei bei geöffnetem Ventil 18 und aktivierter Pumpe 17 Lösungsmittel 12 aus dem Lösungsmittelauslass 19 auf die Reaktionsphase 10 abgegeben wird. Die Abgabe des Lösungsmittels 12 erfolgt dabei vorzugsweise in fein verteilter Form, beispielsweise als Sprühnebel. Dazu kann gemäß einer nicht näher dargestellten Ausführungsvariante der Lösungsmittelauslass 19 eine Düse aufweisen. Alternativ kann der Lösungsmittelauslass auch durch ein geöffnetes Rohrende gebildet sein.

Wird nun das Lösungsmittel 12 während des Entladens der thermochemischen Zelle 1 an die Reaktionsphase 10 abgegeben, so führt die Lösung von Reaktanten in dem Lösungsmittel 12 zu der bereits weiter oben beschriebenen exothermen Reaktion, wobei sich die Reaktionsphase 10 durch die freigewordene thermische Energie erwärmt. Wieder wird der Wärmetauscher 6 mit dem primären Wärmemittelkreislauf 3 durch geöffnete Ventile 5 verbunden und so mit Wärmeträgermittel durchströmt, welches die thermische Energie aus der Reaktionsphase 10 abführt und einer Wärmesenke 60 zuführen kann, wie dies zuvor anhand der Fig. 1 beschrieben wurde.

Der Wärmetauscher 6, der gemäß Fig. 3 dargestellten Ausführungsvariante, ist im Gegensatz zu Fig. 2 als Flächenwärmetauscher46 ausgeführt, welcher über dem Boden 30 des Behälters 2 bzw. der thermochemischen Zelle 1 angeordnet ist. In anderen Ausführungsvarianten kann der Flächenwärmetauscher 46 auch zusätzlich oder alternativ an den Seitenwänden 31 des Behälters angeordnet sein. Die Wärmeübertragung zwischen Wärmeträgermittel und Reaktionsphase 10 erfolgt dabei über die gesamte durch den Flächenwärmetauscher abgedeckte Fläche des Bodens 30 und/oder der Seitenwände 31.

Weiters ist am Behälter 2 der thermochemischen Zelle 1 ein Füllstandsensor 32 vorgesehen, welcher den Füllstand der Lösung in der Reaktionsphase 10 im Behälter 2 ermitteln kann. Gemäß einer Ausführungsvariante kann der Füllstandsensor 32 ein elektromagnetischer bzw. kapazitiver Füllstandsensor 32 sein, welcher den Füllstand im Inneren des Behälters 2 kontaktlos bestimmen kann. Durch Überwachung des Füllstands kann insbesondere auf den Ladezustand der thermochemischen Zelle geschlossen werden. So kann ein hoher Füllstand an Lösung in der Reaktionsphase 10 etwa mit einer entladenen thermochemischen Zelle 1 und ein niedriger Füllstand mit einer geladenen thermochemischen Zelle 1 in Verbindung gebracht werden.

Der Füllstandsensor 32 ist dabei bevorzugt zwischen einer Seitenwand 31 und der Schutzschicht 20 des Behälters 2 der thermochemischen Zelle 1 angeordnet. In alternativen Ausführungsvarianten kann der Füllstandsensor 32 auch an der Außen- oder Innenseite der Seitenwand 31 bzw. der Schutzschicht 20 des Behälters 2 angebracht sein.

Alle gemäß den Fig. 2 und 3 beschriebenen Merkmale der thermochemischen Zellen 1 des thermochemischen Energiespeichers 100 sind ebenso auf Figs. 1 und 4 anwendbar, auch wenn diese Merkmale samt Bezugszeichen nicht explizit dargestellt sind.

In Fig. 1 ist weiter gezeigt, dass der Fluidkreislauf 3 zudem einen Umwälzventilator 33 aufweist, welcher den Austausch von Trägergas 9 in den thermochemischen Zellen 1 durch Erhöhung der Umwälzgeschwindigkeit weiter verbessern kann.

Der thermochemische Energiespeicher 100 weist einen sekundären Wärmemittelkreislauf 35 auf, welcher mit dem Kondensator 14 verbunden ist. Über Wärmemittelleitungen 36 ist der Kondensator 14 mit einer Niedertemperaturquelle 37 verbunden, welche zum Ausgleich und zur Aufnahme der thermischen Energie aus der Kondensation des Lösungsmittels 12 dient und eine effiziente Kondensation im Kondensator 14 aufrecht erhält. Zudem ist eine Wärmemittelpumpe 38 im sekundären Wärmemittelkreislauf 35 vorgesehen, um die Zirkulation des Wärmeträgermittels zu unterstützen.

Als Wärmeträgermittel in sowohl dem primären Wärmemittelkreislauf 3 und dem sekundären Wärmemittelkreislauf 35 wird gemäß einer bevorzugten Ausführungsvariante ein Öl verwendet. In alternativen Ausführungsvarianten können auch alle anderen geeigneten Wärmeträgermittel verwendet werden.

Im primären Wärmemittelkreislauf 3 sind zudem Temperatursensoren 39 vorgesehen, so dass die Temperatur des Wärmemittels vor dem Eintritt in einen Wärmetauscher 6 der thermochemischen Zellen 1 und nach dem Austritt aus dem Wärmetauscher 6 der thermochemischen Zellen 1 gemessen werden kann. Durch Differenzbildung zwischen den gemessenen Temperaturen der Temperatursensoren 39 kann die Temperaturspreizung beim Laden oder Entladen der thermochemischen Zellen 1 ermittelt werden, wodurch Rückschlüsse auf das Lade- oder Entladevermögen, bzw. auf den Ladezustand der thermochemischen Zellen 1 getroffen werden können.

Des Weiteren kann gemäß einer Ausführungsvariante der thermochemische Energiespeicher 100 eine Sicherheitswanne 40 mit einem Leckagedetektor 34 aufweisen, wobei sämtliche thermochemische Zellen 1a, 1b, 1c, 1d in der Sicherheitswanne 40 aufgenommen sind. Kommt es demgemäß zu einem Austritt von Lösung oder Reaktanten aus den Behältern 2 der thermochemischen Zellen 1, so wird diese Lösung von der Sicherheitswanne 40 aufgefangen und ein Austritt aus dem thermochemischen Energiespeicher 100 kann verhindert werden. Die ausgetretene Lösung kann dann von dem Leckagedetektor 34 erkannt werden und ein demensprechendes Signal an den Benutzer ausgegeben werden.

Der thermochemische Energiespeicher 100 weist weiter eine Steuereinrichtung 41 auf, welche dazu programmiert ist, die Ventile 5, 7 des primären Wärmemittelkreislaufs 3 in Abhängigkeit des Ladezustands der thermochemischen Zellen 1 zur Entnahme bzw. Zufuhr von thermischer Energie zu steuern. Die Steuereinrichtung 41 ist dazu mit den Ventilen 5, 7 des primären Wärmemittelkreislaufs 3 verbunden, wobei die Verbindung über Steuerleitungen oder drahtlos erfolgen kann, was in den Figuren jedoch nicht näher dargestellt ist.

Ebenso ist die Steuereinrichtung 41 mit den Temperatursensoren 39 zur Erfassung der Temperaturen des Wärmemittels im primären Wärmemittelkreislauf 3 verbunden. Die Steuereinrichtung 41 ist zudem weiter dazu programmiert, bei Überschreiten einer vorgegebenen Schwellenwerttemperatur einer mit dem primären Wärmemittelkreislauf 3 verbundenen Wärmequelle 50, die Ventile 5, 7 des primären Wärmemittelkreislaufs 3 zum Laden einer nicht oder nur teilweise geladenen thermochemischen Zelle 1 anzusteuern. Je nach Ladezustand der thermochemischen Zellen 1a, 1b, 1c, 1d kann die Steuereinrichtung 41 somit die geeignetste thermochemische Zelle 1 auswählen, um die thermische Energie von der Wärmequelle 50 an diese zuzuführen und die Ventile 5, 7 entsprechend zu schalten. Wie in weiterer Folge anhand von Fig. 4 gezeigt, ist bei Erreichen einer Schwellenwerttemperatur in der Solaranlage 51 die erste thermochemische Zelle 1a zum Laden ausgewählt worden und mit dem primären Wärmemittelkreislauf 3 verbunden, da diese den geringsten Ladezustand (den höchsten Füllstand) aufweist.

Weiter ist die Steuereinrichtung 41 mit den Füllstandsensoren 32 der thermochemischen Zellen 1 verbunden und dazu programmiert die Füllstandsensoren 32 auszulesen und bei Unterschreiten eines vorgegebenen Füllstand-Schwellenwerts in einer thermochemischen Zelle 1, ein Signal auszugeben, welches die vollständige Ladung jener thermochemischen Zelle 1 anzeigt. Die Steuereinrichtung 41 kann dann bei Feststellen der vollständigen Ladung einer thermochemischen Zelle 1 diesen Ladezustand speichern und bei Anforderung von thermischer Energie aus dem Energiespeicher 100, diese vollständig geladene thermochemische Zelle 1 über Ansteuerung der Ventile 5, 7 zur Entladung mit der Wärmesenke 60 verbinden. Andererseits kann das Signal von der Steuereinrichtung 41 auch an den Benutzer oder eine andere Steuereinheit ausgeben werden, um zu signalisieren, dass eine thermochemische Zelle 1 vollständig geladen wurde. Hierzu kann der thermochemische Energiespeicher 100 gemäß einer weiteren, nicht in den Figuren dargestellten Ausführungsvariante, ein optisches Anzeigemittel, beispielsweise ein Display, eine LED, etc., aufweisen oder Signale digital an weitere Geräte oder Anzeigeeinheiten übertragen.

Ebenso ist die Steuereinrichtung 41 wie oben beschrieben mit den Temperatursensoren 39 verbunden und weiter dazu programmiert, im Falle der vollständigen Ladung einer thermochemischen Zelle 1, die Temperaturspreizung des Wärmeträgermittels beim Laden der thermochemischen Zelle 1 aus den erfassten Werten der Temperatursensoren 39 zu ermitteln. Bei Unterschreiten der Temperaturspreizung eines vorgegebenen Temperaturspreizung-Schwellenwerts, kann die Steuereinrichtung 41 die Ventile 5, 7 dann derart ansteuern, um die vollständige geladene thermochemische Zelle 1 vom primären Wärmemittelkreislauf 3 zu trennen. So stellt, wie in den Figs. 1 und 4 gezeigt, die vierte thermochemische Zelle 1d etwa eine vollständig geladene thermochemische Zelle 1 dar (mit niedrigem Füllstand), welche vom primären Wärmemittelkreislauf 3 getrennt ist und bei Anforderung von thermischer Energie aus dem Energiespeicher 100 durch Ansteuerung der Ventile 5, 7 direkt, bzw. indirekt über einen Wärmetauscher, mit einer Wärmesenke 60 verbunden werden kann. Die zweite und dritte thermochemische Zelle 1b, 1c sind wiederum teilweise geladen bzw. entladen.

Die Steuereinrichtung 41 ist wiederum weiter mit der Pumpe 17 in der Lösungsmittelleitung 16 verbunden und dazu programmiert, bei Empfang eines Signals zur Abgabe von thermischer Energie aus dem Energiespeicher 100 an eine Wärmesenke 60, die Pumpe in der Lösungsmittelleitung 16 anzusteuern, um Lösungsmittel 12 aus dem Kondensatbehälter 12 an die Reaktionsphase 10 einer geladenen oder teilweise geladenen thermochemischen Zelle 1 zuzuführen. Dieses Zuführung von Lösungsmittel 12 an die Reaktionsphase 10 entspricht wiederum dem Betriebszustand des Entladens einer thermochemischen Zelle, wie dies in Fig. 3 und Fig. 1 gezeigt ist.

Die Steuereinrichtung 41 ist weiter mit einer Wärmemittelpumpe 43 im primären Wärmemittelkreislauf 3 verbunden und dazu programmiert, die Durchflussmenge an Wärmemittel im Wärmemittelkreislauf 3 durch Ansteuerung der Wärmemittelpumpe 43 zu steuern. Insbesondere die Durchflussrate an Wärmemittel zu der verbundenen Wärmequelle 50 und zu den Wärmetauschern 6 der thermochemischen Zellen 1 kann so gesteuert werden. Dabei kann beispielsweise das an die thermochemische Zelle 1 zugeführte Wärmemittel in einem bevorzugten Temperaturbereich gehalten werden. Gemäß einer in den Figuren nicht dargestellten Ausführungsvariante kann dies etwa durch Ansteuerung der Wärmemittelpumpe 43 mittels Pulsweitenmodulation (PWM) erfolgen.

Gemäß Fig. 1 ist ebenso ein erfindungsgemäßes System 200 bestehend aus dem thermochemischen Energiespeicher 100 und der Wärmepumpe 90 gezeigt. Die Wärmepumpe 90 weist dabei einen Kondensator 91 zur Abgabe von Energie an eine Wärmesenke und einen Verdampfer 92 zur Aufnahme von Energie von einer Wärmequelle auf. Der Verdampfer 92 der Wärmepumpe 90 ist dabei als Wärmesenke 60 mit dem primären Wärmemittelkreislauf 3 des thermochemischen Energiespeichers 100 gekoppelt.

Dazu weist die Wärmepumpe 90 einen mit dem Verdampfer 92 gekoppelten Wärmetauscher 93 auf, welcher mit dem primären Wärmemittelkreislauf 3 des thermochemischen Energiespeichers 100 verbunden ist.

Durch die Kopplung des Verdampfers 92 der Wärmepumpe 90 mit dem thermochemischen Energiespeicher 100 kann selbst bei besonders kalten Umgebungsbedingungen, unter denen die Wärmepumpe 90 in der Regel stark an Effizienz verliert, die Effizienz durch Zufuhr von thermischer Energie hoch gehalten werden, und so auch die externe Zufuhr von Energie, bspw. elektrischer Strom, reduziert werden.

Die Wärmepumpe 90 kann über den Kondensator 91 dann mit einer Wärmesenke, etwa einer Gebäudeheizung, Warmwasserheizung oder dgl. gekoppelt sein, was in den Figuren jedoch nicht näher dargestellt wurde.

Anstelle des anhand Fig. 1 gezeigten thermochemischen Energiespeichers 100, kann das System 200 ebenso den gemäß Fig. 4 dargestellten thermochemischen Energiespeicher 101 umfassen.

In Fig. 4 ist ein erfindungsgemäßer thermochemischer Energiespeicher 101 gemäß einer zweiten Ausführungsvariante der Erfindung gezeigt. Für den thermochemischen Energiespeicher 101 in Fig. 4 gelten ebenso alle zuvor anhand der Fig. 1 beschriebenen Merkmale, sofern im Folgenden nichts Abweichendes angegeben ist.

Wie aus Fig. 4 ersichtlich, weist auch der thermochemische Energiespeicher 101 vier thermochemische Zellen 1, wiederum als erste, zweite, dritte und vierte thermochemische Zelle 1a, 1b, 1c, 1d bezeichnet, auf. In Bezug auf diese thermochemischen Zellen 1a, 1b, 1c, 1d wird ebenso auf die obigen Ausführungen anhand der Figuren 2 und 3 verwiesen.

Wie in Fig. 4 dargestellt, ist der primäre Wärmemittelkreislauf 3 über Ventile 7 direkt oder indirekt (bspw. mittels entsprechend vorgeschaltetem Wärmetauscher) mit einer Gebäudeheizung 61 in einem Gebäude 70 als Wärmesenke 60 und über die Ventile 7 mit einer Solaranlage 51 in dem Gebäude 70 als Wärmequelle 50 verbindbar, wobei in dem in Fig. 4 dargestellten Betriebszustand, die Ventile 7 zur Verbindung der Solaranlage 51 als Wärmequelle 50 geöffnet sind und die Gebäudeheizung 61 von dem Wärmemittelkreislauf 3 getrennt ist, was als strichlierte Wärmemittelleitungen 4 dargestellt wurde.

In dem in Fig. 4 dargestellten Betriebszustand (Laden der ersten thermochemischen Zelle 1a), sind alle Ventile 18 geschlossen und kein Lösungsmittel 12 wird an die thermochemischen Zellen 1 zugeführt. Stattdessen wird thermische Energie aus der Solaranlage 51 als Wärmequelle 50 über den primären Wärmemittelkreislauf 3 an die erste thermochemische Zelle 1a zugeführt, in dieser die Reaktionsphase 10 erwärmt und das in die Gasphase 11 abgegebene freigewordene Lösungsmittel 12 durch Zirkulation des Trägergases im Fluidkreislauf 8 aus der thermochemischen Zelle 1a abgeführt und im Kondensator 14 kondensiert.

Eine detaillierte Beschreibung zum Vorgang des Ladens der thermochemischen Zelle 1 ist oben in Bezug auf Fig. 2 gegeben, worauf in diesem Zusammenhang verwiesen wird.

Wie auch schon für Fig. 1 beschrieben, weist auch der thermochemische Energiespeicher 101 gemäß Fig. 4 einen sekundären Wärmemittelkreislauf 35 auf, welcher mit dem Kondensator 14 verbunden ist. Gemäß der zweiten Ausführungsvariante des Energiespeichers 101, ist der Kondensator 14 nun nicht mit einer externen Niedertemperaturquelle 37 verbunden, sondern kann der sekundäre Wärmemittelkreislauf 35 über steuerbare Ventile 42 und durch Ansteuerung der Ventile 5 mit einem Wärmetauscher 6 in einer oder mehreren thermochemischen Zelle 1 verbunden werden. Gemäß einer alternativen Ausführungsvariante kann der sekundäre Wärmemittelkreislauf 35 auch direkt über die Ventile 5 mit den Wärmetauschern 6 der thermochemischen Zellen 1 verbunden werden, was in den Figuren jedoch nicht näher dargestellt wurde.

Wie in Fig. 4 gezeigt und zuvor beschrieben, ist die erste thermochemische Zelle 1a über den primären Wärmemittelkreislauf 3 mit der Solaranlage 51 als Wärmequelle 50 verbunden und wird durch Zufuhr von thermischer Energie an die Reaktionsphase 10 geladen. Das aus der Reaktionsphase 10 in die Gasphase 11 abgedampfte Lösungsmittel 12 wird über den Fluidkreislauf 8 abtransportiert und im Kondensator 14 aus dem Trägergas 9 kondensiert.

Die dabei im Kondensator 14 anfallende thermische Energie wird nun über den sekundären Wärmemittelkreislauf 35 an die über die Ventile 42, 5 verbundene zweite thermochemische Zelle 1b, bzw. an deren Wärmetauscher 6, zugeführt, wodurch die zweite thermochemische Zelle 1b gleichzeitig mit dem Laden der ersten thermochemischen Zelle 1a vorgewärmt wird.

Auf diese Weise kann nach vollständiger Ladung der ersten thermochemischen Zelle 1a durch Ansteuerung der Ventile 5, 42, die zweite thermochemische Zelle 1b vom sekundären Wärmemittelkreislauf 35 getrennt werden und zur Ladung mit dem primären Wärmemittelkreislauf 3 verbunden werden. Genauso kann in weiterer Folge dann die dritte thermochemische Zelle 1c zum Vorwärmen mit dem sekundären Wärmemittelkreislauf 35 verbunden werden.

Insbesondere ist die Steuereinrichtung dazu programmiert die thermochemischen Zellen 1 in Abhängigkeit ihres Ladezustands zum Vorwärmen und/oder Laden auszuwählen. Auf diese Weise können die zur Ladung vorgesehenen thermochemischen Zellen 1 stets mit hoher Effizienz geladen werden.

Wie in Fig. 4 dargestellt, kann der thermochemische Energiespeicher 101 im Betriebszustand des Entladens als Gebäudeheizung, bzw. als Wärmequelle für eine Gebäudeheizung 61, verwendet werden. Gleichzeitig kann der thermochemische Energiespeicher 101 im Betriebszustand des Ladens als saisonaler Energiespeicher, insbesondere zur Zwischenspeicherung der thermischen Energie aus einer Solaranlage 51 verwendet werden.

Gemäß weiteren Ausführungsvarianten kann der thermochemische Energiespeicher 101 auch als saisonaler Energiespeicher bzw. zur Zwischenspeicherung von thermischer Energie aus thermischen Kraftwerken, insbesondere Fernheizkraftwerken, etc., verwendet werden.

Die anhand der Figuren 1 bis 4 und den Ausführungsvarianten dargestellten Merkmale können zwischen den Ausführungsvarianten beliebig ausgetauscht und kombiniert werden, sofern nicht anders angegeben.

## Patentansprüche

1. Thermochemischer Energiespeicher (100, 101), aufweisend
- ein oder mehrere thermochemische Zellen (1, 1a, 1b, 1c, 1d), jeweils umfassend einen Behälter (2), in welchem in einem Betriebszustand eine Reaktionsphase (10), umfassend zumindest einen Reaktant und Lösungsmittel (12), und eine Gasphase (11), umfassend ein mit Lösungsmittel (12) angereichertes Trägergas (9), ausgebildet ist,
- einen primären Wärmemittelkreislauf (3) mit einem Wärmeträgermittel zur Entnahme und Einbringung von thermischer Energie aus dem thermochemischen Energiespeicher (100, 101) bzw. in den thermochemischen Energiespeicher (100, 101),
- einen Fluidkreislauf (8) zur Ableitung des Trägergases (9) aus zumindest einer der thermochemischen Zellen (1, 1a, 1b, 1c, 1d) und zur Einleitung des Trägergases (9) in zumindest eine der thermochemischen Zellen (1, 1a, 1b, 1c, 1d),
- zumindest eine Lösungsmittelleitung (16) zur Einbringung von Lösungsmittel (12) in die Reaktionsphase (10) zumindest einer der thermochemischen Zellen (1, 1a, 1b, 1c, 1d),
wobei der Reaktant aus einer Gruppe bestehend aus Salzen, Hydroxiden, Karbonaten und ionischen Flüssigkeiten ausgewählt ist, so dass bei Zuführung des Lösungsmittels (12) in die Reaktionsphase (10) zumindest einer der thermochemischen Zellen (1, 1a, 1b, 1c, 1d), aufgrund einer exothermen Reaktion des Reaktanten mit dem Lösungsmittel (12), thermische Energie an das Wärmeträgermittel im primären Wärmemittelkreislauf (3) abgegeben wird und bei Zuführung von Wärme über das Wärmeträgermittel an die Reaktionsphase (10) zumindest einer der thermochemischen Zelle (1, 1a, 1b, 1c, 1d), Lösungsmittel (12) aus der Reaktionsphase (10) in die Gasphase (11) überführt wird, und wobei der Behälter (2) der zumindest einen thermochemischen Zelle (1, 1a, 1b, 1c, 1d) je einen mit dem Fluidkreislauf (8) verbundenen Fluideinlass (21) und Fluidauslass (22) aufweist, welche jeweils in die Gasphase (11) im Behälter (2) münden.

2. Thermochemischer Energiespeicher (100, 101) gemäß Anspruch 1, **dadurch gekennzeichnet, dass** der thermochemische Energiespeicher (100, 101) einen Kondensator (14) im Fluidkreislauf (8) zur Kondensation von Lösungsmittel (12) aus dem Trägergas (9) aufweist.

3. Thermochemischer Energiespeicher (100, 101) gemäß Anspruch 2, **dadurch gekennzeichnet, dass** der thermochemische Energiespeicher (100, 101) einen Kondensatbehälter (15) zur Speicherung des im Kondensator (14) aus dem Trägergas (9) kondensierten Lösungsmittels (12) aufweist, und dass die Lösungsmittelleitung (12) mit dem Kondensatbehälter (15) verbunden ist.

4. Thermochemischer Energiespeicher (100, 101) gemäß einem der Ansprüche 1 bis 3, **dadurch gekennzeichnet, dass** der Fluidkreislauf (8) gegenüber der Umgebung (80) geschlossen ist und Umgebungsdruck aufweist.

5. Thermochemischer Energiespeicher (100, 101) gemäß einem der Ansprüche 1 bis 4, **dadurch gekennzeichnet, dass** der Fluideinlass (21) eine Einlassöffnung (23) und der Fluidauslass (22) eine Auslassöffnung (24) aufweisen, wobei Einlass- und Auslassöffnung (23, 24) jeweils in der Oberseite (25) des Behälters (2) der zumindest einen thermochemischen Zelle (1, 1a, 1b, 1c, 1d) vorgesehen sind.

6. Thermochemischer Energiespeicher (100, 101) gemäß einem der Ansprüche 1 bis 5, **dadurch gekennzeichnet, dass** der Fluideinlass (21) einen ersten Fluidleitabschnitt (26) aufweist, wobei der erste Fluidleitabschnitt (26) zur Ablenkung des im Fluidkreislauf (8) geführten Trägergases (9) in Richtung der Reaktionsphase (10) ausgebildet ist und wobei insbesondere der erste Fluidleitabschnitt (26) im Längsschnitt zumindest eine Tangente (28) aufweist, welche die jeweilige thermochemische Zelle (1, 1a, 1b, 1c, 1d) von ihrer Oberseite (25) in Richtung ihrer Unterseite (30) durchdringt.

7. Thermochemischer Energiespeicher (100, 101) gemäß einem der Ansprüche 1 bis 6, **dadurch gekennzeichnet, dass** in dem Fluidkreislauf (8) ein Umwälzventilator (33) angeordnet ist.

8. Thermochemischer Energiespeicher (100, 101) gemäß einem der Ansprüche 1 bis 7, **dadurch gekennzeichnet, dass** die eine oder mehreren thermochemische Zellen (1, 1a, 1b, 1c, 1d) zumindest einen mit dem primären Wärmemittelkreislauf (3) verbundenen Wärmetauscher (6) aufweist, wobei der Wärmetauscher (6) mit der Reaktionsphase (10) in Kontakt steht, wobei insbesondere der der Wärmetauscher (6) ein Röhrenwärmetauscher (44) ist, welcher innerhalb der Reaktionsphase (10) der jeweiligen thermochemischen Zelle (1, 1a, 1b, 1c, 1d) angeordnet ist, oder wobei insbesondere der Wärmetauscher (6) ein Flächenwärmetauscher (46) ist, welcher über dem Boden (30) und/oder an zumindest einer Seitenwand (31) der jeweiligen thermochemischen Zelle (1, 1a, 1b, 1c, 1d) angeordnet ist.

9. Thermochemischer Energiespeicher (100, 101) gemäß einem der Ansprüche 2 bis 8, **dadurch gekennzeichnet, dass** der thermochemische Energiespeicher (100, 101) einen sekundären Wärmemittelkreislauf (35) aufweist, über welchen der Kondensator (14) mit einer Niedertemperaturquelle (37) verbindbar ist, wobei insbesondere der Kondensator (14) über den sekundären Wärmemittelkreislauf (35) mit einer oder mehreren der thermochemischen Zellen (1, 1a, 1b, 1c, 1d) als Niedertemperaturquelle verbindbar ist.

10. Thermochemischer Energiespeicher (100, 101) gemäß einem der Ansprüche 1 bis 9, **dadurch gekennzeichnet, dass** am Behälter (2) der einen oder mehreren thermochemischen Zellen (1, 1a, 1b, 1c, 1d) ein Füllstandsensor (32) vorgesehen ist.

11. Thermochemischer Energiespeicher (100, 101) gemäß einem der Ansprüche 1 bis 10, **dadurch gekennzeichnet, dass** der thermochemische Energiespeicher (100, 101) eine Sicherheitswanne (40) mit einem Leckagedetektor (34) aufweist, in welcher die eine oder mehreren thermochemischen Zellen (1, 1a, 1b, 1c, 1d) aufgenommen sind.

12. Thermochemischer Energiespeicher (100, 101) gemäß einem der Ansprüche 1 bis 11, **dadurch gekennzeichnet, dass** der primäre Wärmemittelkreislauf (3) steuerbare Ventile (5, 7) aufweist, um eine oder mehrere der thermochemischen Zellen (1, 1a, 1b, 1c, 1d) mit einer Wärmequelle (50) oder Wärmesenke (60) zu verbinden.

13. Thermochemischer Energiespeicher (100, 101) gemäß einem der Ansprüche 1 bis 12, **dadurch gekennzeichnet, dass** der thermochemische Energiespeicher (100, 101) eine Steuereinrichtung (41) aufweist, welche dazu programmiert ist, die Ventile (5, 7, 42) des primären Wärmemittelkreislaufs (3) und/oder des sekundären Wärmemittelkreislaufs (35) in Abhängigkeit des Ladezustands der thermochemischen Zellen (1, 1a, 1b, 1c, 1d) zur Entnahme bzw. Zufuhr von thermischer Energie zu steuern und dass insbesondere die Steuereinrichtung (41) weiter dazu programmiert ist:
- bei Überschreiten einer vorgegebenen Schwellenwerttemperatur einer mit dem primären Wärmemittelkreislauf (3) verbundenen Wärmequelle (50), die Ventile (5, 7) des primären Wärmemittelkreislaufs (3) zum Laden einer nicht oder nur teilweise geladenen thermochemischen Zelle (1, 1a, 1b, 1c, 1d) anzusteuern, und/oder
- die Füllstandsensoren (32) der thermochemischen Zellen (1, 1a, 1b, 1c, 1d) auszulesen und bei unterschreiten eines vorgegebenen Füllstand-Schwellenwerts in einer thermochemischen Zelle (1, 1a, 1b, 1c, 1d), ein Signal auszugeben, welches die vollständige Ladung jener thermochemischen Zelle (1, 1a, 1b, 1c, 1d) anzeigt, und/oder
- im Falle der vollständigen Ladung einer thermochemischen Zelle (1, 1a, 1b, 1c, 1d), die Temperaturspreizung des Wärmeträgermittels beim Laden der thermochemischen Zelle (1, 1a, 1b, 1c, 1d) zu ermitteln, und bei Unterschreiten der Temperaturspreizung eines vorgegebenen Temperaturspreizung-Schwellenwerts, die Ventile (5) derart anzusteuern, um die vollständige geladene thermochemische Zelle (1, 1a, 1b, 1c, 1d) vom primären Wärmemittelkreislauf (3) zu trennen und/oder
- bei Empfang eines Signals zur Abgabe von Wärme aus dem Energiespeicher (100, 101) an eine Wärmesenke (60) eine Pumpe (17) in einer Lösungsmittelleitung (18) anzusteuern, um Lösungsmittel (12) aus dem Kondensatbehälter (15) an die Reaktionsphase (10) einer geladenen oder teilweise geladenen thermochemischen Zelle (1, 1a, 1b, 1c, 1d) zuzuführen.

14. System (200), umfassend einen thermochemischen Energiespeicher (100, 101) gemäß einem der Ansprüche 1 bis 13 und eine Wärmepumpe (90) mit einem Kondensator (91) zur Abgabe von Energie an eine Wärmesenke und einem Verdampfer (92) zur Aufnahme von Energie von einer Wärmequelle, wobei der Verdampfer (92) der Wärmepumpe (90) als Wärmesenke mit dem primären Wärmemittelkreislauf (3) des thermochemischen Energiespeichers (100, 101) gekoppelt ist, wobei insbesondere die Wärmepumpe (90) einen mit dem Verdampfer (92) gekoppelten Wärmetauscher aufweist, welcher mit dem primären Wärmemittelkreislauf (3) des thermochemischen Energiespeichers (100, 101) verbunden ist.

15. Verwendung des thermochemischen Energiespeichers (100, 101) gemäß einem der Ansprüche 1 bis 13 als Gebäudeheizung oder als Pufferspeicher, insbesondere zur Pufferspeicherung von thermischer Energie aus Kraftwerken, von Fernwärme, von Solarkollektoren oder von Photovoltaik-Anlagen.

## Claims

1. Thermochemical energy storage (100, 101), comprising
- one or more thermochemical cells (1, 1a, 1b, 1c, 1d), each comprising a container (2) in which, in an operating state, a reaction phase (10) comprising at least one reactant and solvent (12), and a gas phase (11), comprising a carrier gas (9) enriched with solvent (12), is formed,
- a primary heat medium circuit (3) with a heat transfer medium for removing and introducing thermal energy from the thermochemical energy storage (100, 101) or in the thermochemical energy storage (100, 101),
- a fluid circuit (8) for diverting the carrier gas (9) from at least one of the thermochemical cells (1, 1a, 1b, 1c, 1d) and for introducing the carrier gas (9) in at least one of the thermochemical cells (1, 1a, 1b, 1c, 1d),
- at least one solvent line (16) for introducing solvent (12) into the reaction phase (10) of at least one of the thermochemical cells (1, 1a, 1b, 1c, 1d),
whereby the reactant is selected from a group consisting of salts, hydroxides, carbonates and ionic liquids, so that when the solvent (12) is fed into the reaction phase (10) of at least one of the thermochemical cells (1, 1a, 1b, 1c, 1d), due to an exothermic reaction of the reactant with the solvent (12), thermal energy is released to the heat transfer medium in the primary heat medium circuit (3) and when heat is supplied via the heat transfer medium to the reaction phase (10) of at least one of the thermochemical cells (1, 1a, 1b, 1c, 1d), solvent (12) is transferred from the reaction phase (10) into the gas phase (11), and wherein the container (2) of the at least one thermochemical cell (1, 1a, 1b, 1c, 1d) comprises a fluid inlet (21) and a fluid outlet (22) connected to the fluid circuit (8), which end in the gas phase (11) in the container (2), respectively.

2. Thermochemical energy storage (100, 101) according to claim 1, **characterized in that** the thermochemical energy storage (100, 101) has a condenser (14) in the fluid circuit (8) for condensation of solvent (12) from the carrier gas (9).

3. Thermochemical energy storage (100, 101) according to claim 2, **characterized in that** the thermochemical energy storage (100, 101) has a condensate container (15) for storing the solvent (12) condensed in the condenser (14) from the carrier gas (9), and that the solvent line (12) is connected to the condensate container (15).

4. Thermochemical energy storage (100, 101) according to any of claims 1 to 3, **characterized in that** the fluid circuit (8) is closed with respect to the environment (80) and has ambient pressure.

5. Thermochemical energy storage (100, 101) according to any of claims 1 to 4, **characterized in that** the fluid inlet (21) has an inlet opening (23) and the fluid outlet (22) has an outlet opening (24), whereby the inlet and outlet opening (23, 24) are each provided in the top (25) of the container (2) of the at least one thermochemical cell (1, 1a, 1b, 1c, 1d).

6. Thermochemical energy storage (100, 101) according to any of claims 1 to 5, **characterized in that** the fluid inlet (21) has a first fluid guide section (26), the first fluid guide section (26) being designed to deflect the carrier gas (9) guided in the fluid circuit (8) in the direction of the reaction phase (10) and wherein, in particular, the first fluid guide section (26) comprises at least one tangent (28) in longitudinal section, which penetrates the respective thermochemical cell (1, 1a, 1b, 1c, 1d) from its top (25) in the direction of its bottom (30).

7. Thermochemical energy storage (100, 101) according to any of claims 1 to 6, **characterized in that** a circulation fan (33) is arranged in the fluid circuit (8).

8. Thermochemical energy storage (100, 101) according to any of claims 1 to 7, **characterized in that** the one or more thermochemical cells (1, 1a, 1b, 1c, 1d) comprises at least one heat exchanger (6) connected to the primary heat medium circuit (3), wherein the heat exchanger (6) is in contact with the reaction phase (10), whereby in particular the heat exchanger (6) is a tubular heat exchanger (44) which is arranged within the reaction phase (10) of the respective thermochemical cell (1, 1a, 1b, 1c, 1d), or whereby in particular the heat exchanger (6) is a surface heat exchanger (46) which is arranged above the bottom (30) and/or on at least one side wall (31) of the respective thermochemical cell (1, 1a, 1b, 1c, 1d).

9. Thermochemical energy storage (100, 101) according to any of claims 2 to 8, **characterized in that** the thermochemical energy storage (100, 101) has a secondary heat medium circuit (35), via which the condenser (14) can be connected to a low-temperature source (37), wherein in particular the condenser (14) can be connected via the secondary heat medium circuit (35) to one or more of the thermochemical cells (1, 1a, 1b, 1c, 1d) as a low-temperature source.

10. Thermochemical energy storage (100, 101) according to any of claims 1 to 9, **characterized in that** a filling level sensor (32) is provided on the container (2) of the one or more thermochemical cells (1, 1a, 1b, 1c, 1d).

11. Thermochemical energy storage (100, 101) according to any of claims 1 to 10, **characterized in that** the thermochemical energy storage (100, 101) has a safety tank (40) with a leakage detector (34), in which the one or more thermochemical cells (1, 1a, 1b, 1c, 1d) are accommodated.

12. Thermochemical energy storage (100, 101) according to any of claims 1 to 11, **characterized in that** the primary heat medium circuit (3) comprises controllable valves (5, 7) for connecting one or more of the thermochemical cells (1, 1a, 1b, 1c, 1d) to a heat source (50) or heat sink (60).

13. Thermochemical energy storage (100, 101) according to any of claims 1 to 12, **characterized in that** the thermochemical energy storage (100, 101) has a control unit (41) which is programmed to control the valves (5, 7, 42) of the primary heat medium circuit (3) and/or of the secondary heat medium circuit (35) in dependance of the state of charge of the thermochemical cells (1, 1a, 1b, 1c, 1d) for the removal or supply of thermal energy, and in particular the control device (41) is further programmed:
- to actuate the valves (5, 7) of the primary heat medium circuit (3) for charging an uncharged or only partially charged thermochemical cell (1, 1a, 1b, 1c, 1d) in case a predetermined threshold temperature of a heat source (50) connected to the primary heat medium circuit (3) is exceeded, and/or
- to read out the level sensors (32) of the thermochemical cells (1, 1a, 1b, 1c, 1d) and, in case the fill level in a thermochemical cell (1, 1a, 1b, 1c, 1d) falls below a predetermined fill level threshold value, to output a signal which indicates the complete charging of that thermochemical cell (1, 1a, 1b, 1c, 1d), and/or
- in the case of a fully charged thermochemical cell (1, 1a, 1b, 1c, 1d), to determine the temperature spread of the heat transfer medium when charging the thermochemical cell (1, 1a, 1b, 1c, 1d), and, if the temperature spread falls below a predetermined temperature spread threshold value, to actuate the valves (5) in such a way as to disconnect the fully charged thermochemical cell (1, 1a, 1b, 1c, 1d) from the primary heat transfer medium circuit (3) and/or
- upon receipt of a signal to release heat from the energy storge (100, 101) to a heat sink (60), actuating a pump (17) in a solvent line (18) to supply solvent (12) from the condensate container (15) to the reaction phase (10) of a charged or partially charged thermochemical cell (1, 1a, 1b, 1c, 1d).

14. A system (200) comprising a thermochemical energy storage (100, 101) according to any one of claims 1 to 13 and a heat pump (90) having a condenser (91) for delivering energy to a heat sink and an evaporator (92) for receiving energy from a heat source, wherein the evaporator (92) of the heat pump (90) is coupled as a heat sink to the primary heat medium circuit (3) of the thermochemical energy storage (100, 101), wherein in particular the heat pump (90) comprises a heat exchanger coupled to the evaporator (92), which is connected to the primary heat medium circuit (3) of the thermochemical energy storage (100, 101).

15. Use of the thermochemical energy storage (100, 101) according to one of claims 1 to 13 as building heating or as buffer storage, in particular for buffer storage of thermal energy from power plants, from district heating, from solar collectors or from photovoltaic systems.

## Revendications

1. Accumulateur d'énergie thermochimique (100, 101), comprenant
- une ou plusieurs cellules thermochimiques (1, 1a, 1b, 1c, 1d), comprenant chacune un récipient (2) dans lequel sont formées, dans un état de fonctionnement, une phase de réaction (10) comprenant au moins un réactif et un solvant (12), et une phase gazeuse (11) comprenant un gaz porteur (9) enrichi en solvant (12),
- un circuit primaire de fluide thermique (3) avec un moyen de transfert de chaleur pour le prélèvement et l'apport d'énergie thermique à partir de l'accumulateur d'énergie thermochimique (100, 101) ou dans l'accumulateur d'énergie thermochimique (100, 101),
- un circuit de fluide (8) pour évacuer le gaz porteur (9) d'au moins une des cellules thermochimiques (1, 1a, 1b, 1c, 1d) et pour introduire le gaz porteur (9) dans au moins une des cellules thermochimiques (1, 1a, 1b, 1c, 1d),
- au moins une conduite de solvant (16) pour l'introduction de solvant (12) dans la phase de réaction (10) d'au moins une des cellules thermochimiques (1, 1a, 1b, 1c, 1d),
dans lequel le réactif est choisi dans un groupe constitué de sels, d'hydroxydes, de carbonates et de liquides ioniques, de sorte que, lorsque le solvant (12) est introduit dans la phase de réaction (10), au moins une des cellules thermochimiques (1, 1a, 1b, 1c, 1d), en raison d'une réaction exothermique du réactif avec le solvant (12), de l'énergie thermique est cédée au moyen de transfert de chaleur dans le circuit primaire de transfert de chaleur (3) et, lors de l'apport de chaleur par le moyen de transfert de chaleur à la phase de réaction (10) d'au moins une des cellules thermochimiques (1, 1a, 1b, 1c, 1d), le solvant (12) est transféré de la phase de réaction (10) à la phase gazeuse (11), et dans lequel le récipient (2) de la au moins une cellule thermochimique (1, 1a, 1b, 1c, 1d) présente respectivement une entrée de fluide (21) et une sortie de fluide (22) reliées au circuit de fluide (8), lesquelles débouchent respectivement dans la phase gazeuse (11) dans le récipient (2).

2. Accumulateur d'énergie thermochimique (100, 101) selon la revendication 1, **caractérisé en ce que** l'accumulateur d'énergie thermochimique (100, 101) comprend un condenseur (14) dans le circuit de fluide (8) pour condenser le solvant (12) à partir du gaz porteur (9).

3. Accumulateur d'énergie thermochimique (100, 101) selon la revendication 2, **caractérisé en ce que** l'accumulateur d'énergie thermochimique (100, 101) présente un réservoir de condensat (15) pour le stockage du solvant (12) condensé dans le condenseur (14) à partir du gaz porteur (9), et **en ce que** la conduite de solvant (12) est reliée au réservoir de condensat (15).

4. Accumulateur d'énergie thermochimique (100, 101) selon l'une des revendications 1 à 3, **caractérisé en ce que** le circuit de fluide (8) est fermé par rapport à l'environnement (80) et présente une pression ambiante.

5. Accumulateur d'énergie thermochimique (100, 101) selon l'une des revendications 1 à 4, **caractérisé en ce que** l'entrée de fluide (21) comprend un orifice d'entrée (23) et la sortie de fluide (22) comprend un orifice de sortie (24), les orifices d'entrée et de sortie (23, 24) étant respectivement prévus dans la face supérieure (25) du récipient (2) de ladite au moins une cellule thermochimique (1, 1a, 1b, 1c, 1d).

6. Accumulateur d'énergie thermochimique (100, 101) selon l'une des revendications 1 à 5, **caractérisé en ce que** l'entrée de fluide (21) présente une première section de guidage de fluide (26), la première section de guidage de fluide (26) étant conçue pour dévier le gaz porteur (9) guidé dans le circuit de fluide (8) en direction de la phase de réaction (10) et, en particulier, la première section de guidage de fluide (26) présentant en coupe longitudinale au moins une tangente (28) qui traverse la cellule thermochimique respective (1, 1a, 1b, 1c, 1d) de sa face supérieure (25) en direction de sa face inférieure (30).

7. Accumulateur d'énergie thermochimique (100, 101) selon l'une des revendications 1 à 6, **caractérisé en ce qu'**un ventilateur de circulation (33) est disposé dans le circuit de fluide (8).

8. Accumulateur d'énergie thermochimique (100, 101) selon l'une des revendications 1 à 7, **caractérisé en ce que** la ou les cellules thermochimiques (1, 1a, 1b, 1c, 1d) comportent au moins un échangeur de chaleur (6) relié au circuit primaire de fluide thermique (3), ledit échangeur de chaleur (6) étant en contact avec la phase de réaction (10), dans lequel, en particulier, l'échangeur de chaleur (6) est un échangeur de chaleur tubulaire (44) qui est disposé à l'intérieur de la phase de réaction (10) de la cellule thermochimique respective (1, 1a, 1b, 1c, 1d), ou dans lequel, en particulier, l'échangeur de chaleur (6) est un échangeur de chaleur de surface (46) qui est disposé au-dessus du fond (30) et/ou sur au moins une paroi latérale (31) de la cellule thermochimique respective (1, 1a, 1b, 1c, 1d).

9. Accumulateur d'énergie thermochimique (100, 101) selon l'une des revendications 2 à 8, **caractérisé en ce que** l'accumulateur d'énergie thermochimique (100, 101) comporte un circuit secondaire de fluide thermique (35) par lequel le condenseur (14) peut être relié à une source basse température (37), le condenseur (14) pouvant notamment être relié par le circuit secondaire de fluide thermique (35) à une ou plusieurs des cellules thermochimiques (1, 1a, 1b, 1c, 1d) en tant que source basse température.

10. Accumulateur d'énergie thermochimique (100, 101) selon l'une des revendications 1 à 9, **caractérisé en ce qu'**un capteur de niveau (32) est prévu sur le récipient (2) d'une ou plusieurs cellules thermochimiques (1, 1a, 1b, 1c, 1d).

11. Accumulateur d'énergie thermochimique (100, 101) selon l'une des revendications 1 à 10, **caractérisé en ce que** l'accumulateur d'énergie thermochimique (100, 101) comprend un bac de sécurité (40) avec un détecteur de fuite (34), dans lequel sont logées les une ou plusieurs cellules thermochimiques (1, 1a, 1b, 1c, 1d).

12. Accumulateur d'énergie thermochimique (100, 101) selon l'une des revendications 1 à 11, **caractérisé en ce que** le circuit primaire de fluide thermique (3) comprend des vannes contrôlables (5, 7) pour relier une ou plusieurs des cellules thermochimiques (1, 1a, 1b, 1c, 1d) à une source de chaleur (50) ou à un puits de chaleur (60).

13. Accumulateur d'énergie thermochimique (100, 101) selon l'une des revendications 1 à 12, **caractérisé en ce que** l'accumulateur d'énergie thermochimique (100, 101) comprend un dispositif de commande (41) programmé pour commander les vannes (5, 7, 42) du circuit primaire de fluide thermique (3) et/ou du circuit secondaire de fluide thermique (35) en fonction de l'état de charge des cellules thermochimiques (1, 1a, 1b, 1c, 1d) pour prélever ou fournir de l'énergie thermique, et **en ce que**, en particulier, le dispositif de commande (41) est en outre programmé à cet effet:
- en cas de dépassement d'une température de seuil prédéterminée d'une source de chaleur (50) reliée au circuit primaire de fluide thermique (3), à commander les vannes (5, 7) du circuit primaire de fluide thermique (3) pour charger une cellule thermochimique (1, 1a, 1b, 1c, 1d) non chargée ou seulement partiellement chargée, et/ou
- lire les capteurs de niveau (32) des cellules thermochimiques (1, 1a, 1b, 1c, 1d) et, lorsque le niveau dans une cellule thermochimique (1, 1a, 1b, 1c, 1d) passe en dessous d'une valeur seuil prédéfinie, émettre un signal qui indique la charge complète de cette cellule thermochimique (1, 1a, 1b, 1c, 1d), et/ou
- dans le cas de la charge complète d'une cellule thermochimique (1, 1a, 1b, 1c, 1d), de déterminer l'étalement de la température du fluide caloporteur lors de la charge de la cellule thermochimique (1, 1a, 1b, 1c, 1d), et, lorsque l'étalement de la température est inférieur à un seuil d'étalement de la température prédéfini, à commander les vannes (5) de manière à séparer la cellule thermochimique entièrement chargée (1, 1a, 1b, 1c, 1d) du circuit primaire de fluide thermique (3), et/ou
- à la réception d'un signal d'émission de chaleur depuis l'accumulateur d'énergie (100, 101) vers un puits de chaleur (60), commander une pompe (17) dans une conduite de solvant (18) pour fournir du solvant (12) depuis le réservoir de condensat (15) à la phase de réaction (10) d'une cellule thermochimique chargée ou partiellement chargée (1, 1a, 1b, 1c, 1d).

14. Système (200) comprenant un accumulateur d'énergie thermochimique (100, 101) selon l'une des revendications 1 à 13 et une pompe à chaleur (90) comprenant un condenseur (91) pour fournir de l'énergie à un puits de chaleur et un évaporateur (92) pour recevoir de l'énergie d'une source de chaleur, l'évaporateur (92) de la pompe à chaleur (90) étant couplé, en tant que puits de chaleur, au circuit primaire de fluide thermique (3) du dispositif de stockage d'énergie thermochimique (100, 101), et, en particulier, la pompe à chaleur (90) comportant un échangeur de chaleur couplé à l'évaporateur (92) et relié au circuit primaire de fluide thermique (3) du dispositif de stockage d'énergie thermochimique (100, 101).

15. Utilisation de l'accumulateur d'énergie thermochimique (100, 101) selon l'une des revendications 1 à 13 comme chauffage de bâtiment ou comme accumulateur tampon, en particulier pour le stockage tampon d'énergie thermique provenant de centrales électriques, de chauffage urbain, de collecteurs solaires ou d'installations photovoltaïques.
